(19) **Europäisches Patentamt / European Patent Office / Office européen des brevets**

(11) **EP 4 001 036 B1**

(12) **EUROPEAN PATENT SPECIFICATION**

(45) Date of publication and mention
of the grant of the patent:
**01.11.2023 Bulletin 2023/44**

(21) Application number: **20844456.2**

(22) Date of filing: **20.07.2020**

(51) International Patent Classification (IPC):
**B60W 20/19** (2016.01)    **B60K 6/46** (2007.10)
**B60W 10/06** (2006.01)    **B60W 10/08** (2006.01)
**B60W 50/06** (2006.01)    **B60W 10/26** (2006.01)

(52) Cooperative Patent Classification (CPC):
**B60L 50/60; B60K 6/46; B60L 15/2045;**
**B60L 50/16; B60L 58/12; B60W 10/06;**
**B60W 10/08; B60W 10/26; B60W 20/19;**
B60L 2200/12; B60L 2240/421; B60L 2240/423;
B60L 2240/427; B60L 2240/429; B60L 2240/441;

(Cont.)

(86) International application number:
**PCT/JP2020/028056**

(87) International publication number:
**WO 2021/015164 (28.01.2021 Gazette 2021/04)**

(54) **VEHICLE**

FAHRZEUG

VÉHICULE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **19.07.2019 PCT/JP2019/028435**

(43) Date of publication of application:
**25.05.2022 Bulletin 2022/21**

(73) Proprietor: **Yamaha Hatsudoki Kabushiki Kaisha
Iwata-shi, Shizuoka 438-8501 (JP)**

(72) Inventors:
• **KIMURA, Yasuto
Iwata-shi, Shizuoka 438-8501 (JP)**
• **MASUDA, Masafumi
Iwata-shi, Shizuoka 438-8501 (JP)**

(74) Representative: **Stöckeler, Ferdinand et al
Schoppe, Zimmermann, Stöckeler
Zinkler, Schenk & Partner mbB
Patentanwälte
Radlkoferstrasse 2
81373 München (DE)**

(56) References cited:
**EP-A1- 0 556 942**    **EP-A1- 0 830 968**
**DE-A1- 4 133 013**    **JP-A- H0 888 905**
**JP-A- 2001 211 505**    **JP-A- 2016 022 847**

(52) Cooperative Patent Classification (CPC): (Cont.)
B60L 2240/443; B60L 2250/26; B60W 2300/36;
B60W 2510/244; B60W 2540/10; B60W 2710/0644;
B60W 2710/0661; B60W 2710/083;
B60W 2710/086; Y02T 10/62; Y02T 10/64;
Y02T 10/70; Y02T 10/7072; Y02T 10/72

**Description**

[Technical Field]

This invention relates to a vehicle.

[Background Art]

A motorcycle, in for example Patent Literature 1, is disclosed as one example of vehicles. In addition, an automated guided vehicle, in for example Patent Literature 2, is disclosed as one example of vehicles. The vehicles disclosed in Patent Literature 1 and Patent Literature 2 are provided with a battery as an energy storage device, a power generator, and a propulsive electric motor. The energy storage device supplies electric power stored as energy to a propulsive electric motor. The power generator is constituted of a power generation engine and a power generation electric motor and drives the power generation electric motor by the power generation engine to supply generated electric power to a propulsive electric motor. The vehicles disclosed in Patent Literature 1 and Patent Literature 2 run by the propulsive electric motor to which electric power is supplied from the energy storage device and/or the power generator. EP 0 830 968 A1 discloses a method for an internal combustion engine of a hybrid vehicle with at least one electrical machine and a battery. The method involves varying the transmitted power through the mechanical connection to this electrical machine immediately directed towards a set point and the battery gives out or takes in power during the change in operating state. The engine is guided during the change by certain selected operating points in the engine characteristic which are optimal with regard to at least one operating parameter like minimal fuel consumption, toxic emissions or noise generation.

EP 0 556 942 A1 teaches a non-track-bound vehicle having an internal combustion engine to whose crankshaft an electrical generator is coupled. The vehicle has at least one electric motor which is coupled to a drive wheel or drive axle of the vehicle. A controller is provided to switch from one operating point of the internal combustion engine to another operating point thereof without interrupting the driving power.

JP H08 88905 A teaches a hybrid vehicle. When the torque of an internal combustion engine corresponding to a driver's request torque is abruptly increased, the torque increase amount is suppressed to an amount which can maintain an air-fuel ratio control thereby to suppress the increase in detrimental components in the exhaust gas due to the abrupt increase of the torque.

DE 41 33 013 A1 teaches a motor vehicle containing a unit consisting of an internal combustion engine and a generator which supplies current to electric motors coupled to the driving wheels via a power-distribution power electronics system. In addition there is an accumulator into which power from the internal combustion engine-generator unit is fed. An electronic control controls the power distributor depending on a running signal in accordance with boundary conditions, e.g. the lowest possible specific fuel consumption.

[Citation List]

[Patent Literature]

[Patent Literature 1] JP-A-2007-131179
[Patent Literature 2] JP-A-2016-199225

[Summary of Invention]

[Problem to Be Solved by the Invention]

It is desired for a vehicle running by a propulsive electric motor to have reproducibility of the response of output to an acceleration instruction regardless of the energy storage state of an energy storage device while suppressing the increase of the fuel consumption.

This invention has an object to provide a vehicle having reproducibility of the response of output to an acceleration instruction regardless of the energy storage state of an energy storage device while suppressing an increase of fuel consumption.

[Solution to the Problem]

The vehicle disclosed in Patent Literature 1 is propelled by the propulsive electric motor driven by receiving electric power supplied from the energy storage device and/or the power generator. In the vehicle disclosed in Patent Literature 1, electric power stored in the energy storage device as energy is supplied to the propulsive electric motor, and the electric power is further supplied from the power generator thereto, whereby the responsiveness of acceleration of the vehicle in response to the acceleration instruction is improved. The state of charge of a battery mounted to the vehicle easily affects the acceleration ability of the vehicle.

For example, when a driver of a vehicle makes an acceleration instruction to require the increase of a target power (a target of power outputted from a propulsive electric motor), a controller increases the electric power supplied from an energy storage device and a power generation electric motor to a propulsive electric motor toward target power. When an electric power supplied from an energy storage device and a power generation electric motor to a propulsive electric motor increases, the power outputted from the propulsive electric motor increases. However, if the electric power stored in a power energy storage device is less than a reference value, the amount of the electric power that can be supplied from the energy storage device to a propulsive electric motor is small. Accordingly, it may take some time to bring the power outputted from a propulsive electric motor to the target power only by the electric power supplied from an energy storage device and a power generation electric motor. This is because the output of the power from a power generation engine for generating electric power in response to an acceleration instruction may be delayed in some cases, depending on the rotation speed of a power generation engine.

The controller of the vehicle in Patent Literature 2 increases the rotation speed of an engine according to the amount of electric power of the energy storage device. After that, the vehicle of Patent Literature 2 increases the electric power supplied to the propulsive electric motor by supplying the electric power stored in the energy storage device to the propulsive electric motor with increased output (acceleration instruction). The vehicle of Patent Literature 2 stores the electric power to be supplied to the propulsive electric motor when the output is increased in the energy storage device before increasing the output.

However, the vehicle of Patent Literature 2 stores the electric power in a battery while increasing the power outputted from the engine before increasing the output. Accordingly, the fuel consumption of the engine increases in the vehicle of Patent Literature 2.

Considering the above state, the present inventors have studied how to output the power without delay from an engine by an acceleration instruction as a trigger without increasing the fuel consumption of the engine before the acceleration instruction. In this study, the present inventors have found that reducing the load torque of a power generation electric motor at least according to the energy storage amount of an energy storage device enables an increase in the rotation speed of an engine.

When the rotation speed increases in advance, the torque outputted from an engine when the fuel and the air supplied to the engine at the rotation speed is greater than, for example, the torque in a case where the rotation speed of an engine is not increased in advance. That is, when the rotation speed increases in advance, the power outputted from the engine when the fuel and the air supplied to the engine at the rotation speed is greater than, for example, the power in a case where the rotation speed of the engine is not increased in advance. That is, when the fuel and the air increase, the output power increases without waiting for the further increase of the rotation speed.

For this reason, even when the energy storage amount in the energy storage device is small, the electric power corresponding to a target power can be outputted from an energy storage device and a power generation electric motor while suppressing the delay of response in the same manner as when the energy storage amount in an energy storage device is large. Due to this circumstance, the reproducibility of the response of output to an acceleration instruction can be maintained regardless of the energy storage amount of an energy storage device.

In addition, the rotation speed of the engine is increased by reducing the load torque of the power generation electric motor to the engine before an acceleration instruction. That is, the rotation speed is increased while suppressing the increase of the engine power. Accordingly, the fuel consumption of the engine can be suppressed.

Due to these means, a vehicle having reproducibility of the response of output to an acceleration instruction regardless of the energy storage state of an energy storage device while suppressing the increase of the fuel consumption can be achieved.

To achieve the above purpose, the invention according to claim 1 provides:

(1) A vehicle, wherein
the vehicle comprises:

an engine having a rotatable crankshaft and configured to output power generated by combustion as both torque and a rotation speed of the crankshaft;
a power generation electric motor disposed so as to operate in conjunction with the crankshaft and configured to be driven by the engine to generate electric power;

an energy storage device configured to store the electric power generated by the power generation electric motor as stored energy;

a propulsive electric motor configured to receive electric power from the energy storage device and/or the power generation electric motor so as to output power, the propulsive electric motor being different from the power generation electric motor;

a propulsion system configured to be driven by the power outputted from the propulsive electric motor; and

a controller configured to

control the engine, the propulsive electric motor, and the power generation electric motor so as to control the engine and the power generation electric motor such that electric power supplied to the propulsive electric motor is increased in response to an acceleration instruction; and

when the propulsion system is driven only by the power outputted from the propulsive electric motor, increase a rotation speed of the engine before the acceleration instruction by reducing a load torque of the power generation electric motor at least according to an energy storage amount of the energy storage device, such that a target power to be outputted according to the acceleration instruction by the propulsive electric motor that is driven by electric power supplied from the energy storage device and/or the power generation electric motor is outputted in response to the acceleration instruction as a trigger regardless of an energy storage amount of the energy storage device.

The vehicle of (1) includes an engine, a power generation electric motor, an energy storage device, a propulsive electric motor, a propulsion system, and a controller.

The engine has a rotatable crankshaft and outputs power generated by combustion as torque and a rotation speed of the crankshaft.

The power generation electric motor is disposed so as to operate in conjunction with the crankshaft and is driven by the engine to generate electric power.

The energy storage device stores the electric power generated in the power generation electric motor as energy.

The propulsive electric motor receives the supply of electric power from the energy storage device and/or the power generation electric motor and outputs power.

The propulsion system is driven by the power outputted from the propulsive electric motor.

The controller controls the engine, the propulsive electric motor, and the power generation electric motor. The controller controls the engine and the power generation electric motor such that electric power supplied to the propulsive electric motor will be increased in response to an acceleration instruction. When the propulsion system of a vehicle is driven only by the power outputted from the propulsive electric motor, the controller reduces the load torque of the power generation electric motor at least according to an energy storage amount of the energy storage device before the acceleration instruction. The controller thereby increases the rotation speed of the engine before the acceleration instruction. Due to this circumstance, the vehicle outputs a target power according to an acceleration instruction, by the acceleration instruction as a trigger, by the electric power stored in the energy storage device and/or the electric power supplied from the power generation electric motor regardless of the storage amount of the energy storage device.

When the rotation speed increases before an acceleration instruction, the torque outputted from the engine when the fuel and the air supplied to the engine at the rotation speed increases compared with, for example, the torque in a case where the rotation speed of the engine is not increased in advance. That is, when the rotation speed is increased in advance, the power outputted from the engine when the fuel and the air supplied to the engine at the rotation speed increases compared with, for example, the power in a case where the rotation speed of the engine is not increased in advance.

For example, the margin driving force of the engine increases when the engine rotation speed increases. The margin driving force refers to a difference between the power outputted from the engine before an acceleration instruction and the maximum power outputtable from the engine at a rotation speed before the acceleration instruction.

For this reason, the electric power corresponding to a target power can be outputted from an energy storage device and a power generation electric motor while suppressing the delay of response like a case where the energy storage amount in an energy storage device is large even when the energy storage amount in the energy storage device is small. Due to this circumstance, the reproducibility of the response of output to an acceleration instruction can be maintained regardless of the energy storage amount of an energy storage device.

In the vehicle of (1), the controller increases the rotation speed of the engine by reducing the load torque of the power generation electric motor to the power generation engine before an acceleration instruction. That is, the rotation speed increases while suppressing the increase of the engine power. Accordingly, the fuel consumption of the engine can be suppressed. As described above, the propulsive electric motor of (1) can output the target power according to the acceleration instruction while suppressing the fuel consumption regardless of the energy storage amount. The vehicle of (1) can have reproducibility of the response of output to an acceleration instruction regardless of the energy storage state of an energy storage device while suppressing the increase of the fuel consumption.

In addition, when the rotation speed of the engine is increased by reducing the load torque of the power generation electric motor, the electric power outputted from the power generation electric motor does not increase even when the rotation speed increases. For this reason, the energy storage device becomes fully charged, and the possibility of deterioration of the energy storage device can be reduced. Accordingly, according to the vehicle of (1), the margin driving force of the engine can be increased before an acceleration instruction while suppressing the increase in size of the energy storage device.

In a preferred embodiment according to claim 2, the invention further provides:

(2) The vehicle of (1), wherein

the controller controls the engine and the power generation electric motor such that

an amount of change of a rotation speed of the engine from a point of time of the acceleration instruction to a point of time when the rotation speed increases to reach a predetermined reference speed is smaller by a degree according to an energy storage amount of the energy storage device.

According to the constitution of (2), the amount of change of a rotation speed of the engine from a point of time of the acceleration instruction to a point of time when the rotation speed increases to reach a predetermined reference speed is small. For this reason, the power consumption by the inertia torque associated with the output increase of the rotation speed of the crankshaft of the engine becomes smaller by the degree according to the energy storage amount of the energy storage device. Accordingly, the vehicle of (2) can maintain the acceleration instruction responsiveness to the acceleration instruction with respect to a target.

In a preferred embodiment according to claim 3, the invention further provides:

(3) The vehicle of (2), wherein

the controller

controls the engine and the power generation electric motor according to an energy storage amount of the energy storage device before the acceleration instruction such that

a sum of electric power outputted from the power generation electric motor driven by a maximum power outputtable from the engine at a rotation speed at a point of time before the acceleration instruction and electric power supplied from the energy storage device equals a target value set according to a current vehicle speed and a current opening degree of a throttle valve of the engine.

According to the constitution of (3), the sum of the margin driving force of the engine and the power outputtable from the power generation electric motor is maintained to a target value, for example, even when the energy storage amount of the energy storage device varies. Accordingly, the vehicle of (3) can suppress the deterioration of the reproducibility of the response of output by the variation of the electric power stored in the energy storage device as energy.

The terminology used herein is for the purpose of defining only specific embodiments and is not intended to limit the invention. The term "and/or" used in the present description includes any or all combinations of one or a plurality of related and listed components. When used in the present description, the use of the terms "including", "comprising" or "having" and the variations thereof specifies the presence of the described characteristics, steps, operations, elements, components, and/or equivalents thereof and may include one or a plurality of steps, motions, elements, components, and/or groups thereof. When used in the present description, the terms "attached", "connected", "joined", and/or equivalents thereof are widely used, and unless otherwise specified, the terms include both direct and indirect attachment, connection, and joining. Furthermore, the terms "connected" and "joined" are not particularly limited to physical or mechanical connections or joints and may include direct or indirect electrical connection or joining. Unless otherwise defined, all terms (including technical and scientific terms) used in the present description have the same meanings as commonly understood by a skilled person to whom the present invention belongs. A term as defined in common dictionaries is to be interpreted to have a meaning corresponding to the meaning in the related art and in the context of the present invention, and unless explicitly defined in the present description, the term is never interpreted as an ideal or an excessively formal meaning. In the explanation of the present invention, it is to be understood that many techniques and steps are described. Each of these has an individual benefit, and each may be used together with at least one of, or in some cases, all other disclosed techniques. Thus, for clarity, this explanation refrains from unnecessarily repeating all possible combinations of individual steps.

In the present description, a new vehicle is described. A large number of specific details for providing a complete understanding of this invention will be described in the following explanations for the purpose of explanation. However, it is apparent that a person skilled in the art can implement this invention even without these specific details. The present disclosure should be considered as an illustration of the present invention and is not intended to limit any specific embodiment expressed by the following drawings and explanations.

A vehicle is a transporting means. The vehicle is, for example, a vehicle having wheels. Examples of the vehicle include automobiles, trains, ships, aircrafts, and the like. An automobile is not particularly limited, and examples thereof include four-wheeled automobiles, straddled vehicles, and the like. A four-wheeled automobile, for example, has a vehicle interior. An aircraft is not particularly limited, and examples thereof include rotorcrafts, fixed-wing aircrafts, and the like. Examples of rotorcrafts include helicopters, multicopters, and drones. Examples of fixed-wing aircraft include airplanes. The vehicle may be directly driven by a driver riding in the vehicle or may be wirelessly driven without any driver riding therein. The vehicle may be a golf cart. The vehicle may be a caterpillar-type snowmobile. The vehicle may be a snowblower.

The straddled vehicle is a vehicle in which a driver sits across the saddle. Examples of the straddled vehicle include scooter type, moped type, off-road type, and on-road type motorcycles. The straddled vehicle is not limited to a motorcycle and may be, for example, a motor three-wheeler, an ATV (All-Terrain Vehicle), and the like. A motor three-wheeler may be provided with two front wheels and one rear wheel or one front wheel and two rear wheels. The propulsion system of a straddled vehicle may be a rear wheel or may be a front wheel. The propulsion system of a straddled vehicle may be both of rear and front wheels.

The vehicle is, for example, configured as turnable in a lean position. The vehicle configured as turnable in a lean position is configured so as to turn in a position tilted inward of the curve. Due to this feature, the vehicle configured as turnable in a lean position runs against the centrifugal force applied to the vehicle during turning. Examples of the vehicle configured as turnable in a lean position include straddled vehicles configured as turnable in a lean position (for example, a motorcycle and a motor three-wheeler). Since the vehicle configured as turnable in a lean position requires lightness, the responsiveness of progress to a starting operation is important. For example, the vehicle configured as turnable in a lean position does not have a torque converter utilizing hydrodynamic action in the power transmission path from a power source to a propulsion system.

Examples of the engine include a single-cylinder engine and an engine having two or more cylinders. The operation of an engine refers to outputting the power generated by combustion as torque and a rotation speed of a crankshaft. For example, the engine is preferably a four-stroke engine having a high load region and a low load region in the four strokes. A four-stroke engine having a high load region and a low load region in the four strokes is, for example, a single-cylinder engine, a two-cylinder engine, an irregular interval combustion-type three-cylinder engine, or an irregular interval combustion-type four-cylinder engine. The high load region refers to a region where the load torque is higher than the average value of the load torque in one combustion cycle among the entire single combustion cycle of the engine. However, the power generation engine may be a regular interval combustion-type engine having three or more cylinders.

The power generation electric motor is a rotating electrical machine capable of generating power. For example, the propulsive electric motor may be a rotating electrical machine enabling both power generation and motor operation. The power generation electric motor may be an electric motor different from a starting motor. The power generation electric motor may be an outer rotor-type electric motor or may be an inner rotor-type electric motor. Alternatively, the power generation electric motor may be an axial gap-type electric motor, not a radial gap-type electric motor. According to one embodiment, the rotor is provided with a permanent magnet in the power generation electric motor. According to one embodiment, the rotor is provided with a permanent magnet in both the propulsive electric motor and the power generation electric motor.

The energy storage device is a device that stores energy. For example, the energy storage device is an electric power storage device that stores electrical energy. Examples of electric power storage devices include a battery or a capacitor. The form of the energy stored in the energy storage device is not particularly limited. For example, the energy storage device may be a flywheel-type device having a flywheel and a motor. A flywheel-type device stores the rotation energy of a flywheel by driving the flywheel by the supplied electric power. The flywheel-type device converts the rotation energy of the flywheel into electric power and outputs the electric power. That is, the electric power is supplied to an energy storage device. The electric energy storage device outputs electric power. Accordingly, an energy storage device can be considered as a device storing electric power when seen from the exterior. Hereinafter, the expression "stores electric power" includes converting the electric power into energy, such as rotation and storing the energy.

The energy storage device receives the supply of the electric power generated in the power generation electric motor. However, the electric power supplied to the energy storage device is not particularly limited, and for example, may be electric power generated by a propulsive electric motor. That is, the energy storage device may store electric power regeneratively generated by a propulsive electric motor.

The propulsive electric motor is a rotating electrical machine capable of performing the motor operation. A propulsive electric motor outputs power. For example, the propulsive electric motor may be a rotating electrical machine enabling both power generation and motor operation. The propulsive electric motor may be an outer rotor-type electric motor or may be an inner rotor-type electric motor. Alternatively, the propulsive electric motor may be an axial gap-type electric motor, not a radial gap-type electric motor.

The power used in the present description refers to mechanical power.

Examples of the propulsion system include a wheel (driving wheel), a caterpillar, a propeller, and the like. When the vehicle is an automobile, the propulsion system may be, for example, a wheel (driving wheel). A propulsion wheel may be a rear wheel or may be a front wheel. A propulsion wheel may be both of rear and front wheels. When the vehicle is an aircraft, the propulsion system may be, for example, a propeller.

The controller may have a processor executing a program or may be an electronic circuit.

An acceleration instruction is an instruction for increasing the output from a vehicle.

For example, an acceleration instruction is outputted from an acceleration instruction part provided in a vehicle.

For example, a propulsion instruction part that outputs an acceleration instruction is an accelerator operator. For example, the accelerator operator is an accelerator grip. For example, the accelerator operator may be a pedal. For example, the operation amount of an accelerator operator is an operation amount of an accelerator operator based on a state where no control force is provided. For example, the operation amount is a displacement of an accelerator grip by the operation to the position of the accelerator grip in a state where no control force is provided. However, the operation amount is not limited thereto and may be an amount of force applied by an operation to a state where no control force is provided.

For example, the propulsion instruction part may be a reception part that receives wireless signals indicating acceleration or deceleration from a remote control device operated by a driver of a series hybrid-type vehicle. For example, the remote control device is a remote controller. The remote control device sends wireless signals indicating acceleration or deceleration of a series hybrid-type vehicle by the driver operating a lever. For example, the operation amount of a remote control device is an operation amount of a lever based on a state where no control force is provided. For example, the operation amount is a displacement of a lever by the operation to the position of the lever in a state where no control force is provided. However, the operation amount is not limited thereto and may be an amount of force applied to a lever to a state where no control force is provided.

For example, a propulsion instruction part that outputs an acceleration instruction may be an automatic propulsion controller. The automatic propulsion controller outputs an acceleration instruction or deceleration instruction on the basis of a travel route or a flight path and the speed set along these paths of a series hybrid-type vehicle. For example, an automatic propulsion controller may output an acceleration instruction or deceleration instruction for autonomously restoring speed when the speed changes by disturbances such as wind directions and road surface inclinations. For example, an automatic propulsion controller may receive a target speed or target direction instructed from a remote controller and output an acceleration instruction or deceleration instruction that can maintain the target.

The reproducibility of responsiveness of output of a vehicle to an acceleration instruction refers to that the change of the response of increase of the vehicle's output is suppressed to an acceleration instruction. The reproducibility of the response of output of a vehicle is measured as an increase amount or time of acceleration until the vehicle acceleration increases to reach a prescribed level to an acceleration instruction. The reproducibility of the response of output of a vehicle may be measured, for example, as an increase amount or time of acceleration until the acceleration of the rotating shaft of a propulsive electric motor increases to reach a prescribed level.

The power outputted from the propulsive electric motor triggered by an acceleration instruction means power outputted from the propulsive electric motor after the acceleration instruction and before the increase of the rotation speed of the crankshaft. For example, power output from an engine increases when the output torque of the crankshaft increases before the rotation speed of the crankshaft increases. This increases the power outputted from the power generation electric motor. In addition, the power outputted from a propulsive electric motor increases.

[Effect of the Invention]

According to this invention, a vehicle having reproducibility of the response of output to an acceleration instruction regardless of the energy storage state of an energy storage device while suppressing the increase of the fuel consumption can be provided.

[Brief Description of Drawings]

Fig. 1 is a diagram explaining a vehicle according to one embodiment of this invention.

Fig. 2 is a schematic diagram indicating each relationship among the main constituents of the vehicle illustrated in Fig. 1.

Fig. 3 is a diagram indicating a relationship between the engine rotation speed and the engine torque of the vehicle illustrated in Fig. 1.

Fig. 4 is a flowchart explaining the operation of the controller of the vehicle illustrated in Fig. 1.

Fig. 5 is a diagram indicating a relationship between the battery charging rate and electric power suppliable from the battery.

Fig. 6 is a diagram indicating a relationship between the crankshaft rotation speed and the crankshaft torque of the vehicle illustrated in Fig. 1.

Fig. 7 is a flowchart explaining the operation of the controller when acceleration is instructed in the vehicle illustrated in Fig. 1.

Fig. 8a is a diagram indicating the relationships among engine output, electric power supplied from the power generation electric motor, storage electric power of the energy storage device, and the target drive electric power when acceleration is instructed in the state illustrated in Fig. 6.

Fig. 8b is a diagram indicating the relationships among engine output, electric power supplied from the power generation electric motor, storage electric power of the energy storage device, and the target drive electric power when acceleration is instructed in the state illustrated in Fig. 6.

Fig. 8c is a diagram indicating the relationships among engine output, electric power supplied from the power generation electric motor, storage electric power of the energy storage device, and the target drive electric power when acceleration is instructed in the state illustrated in Fig. 6.

[Mode for Carrying out the Invention]

Hereinafter, this invention is explained on the basis of a preferred embodiment with reference to the drawings.

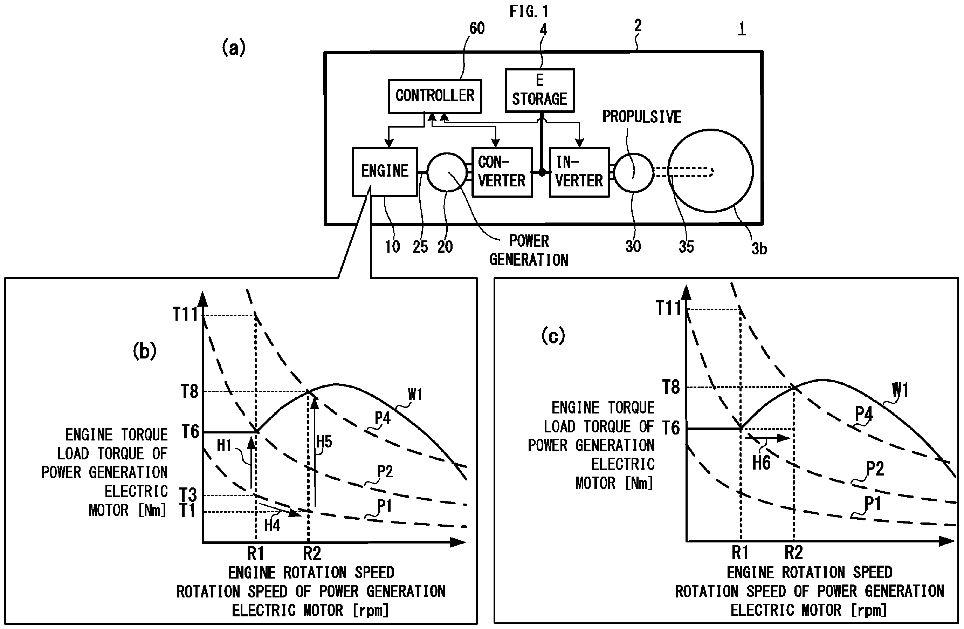

Fig. 1 is a diagram explaining a vehicle according to one embodiment of this invention.

Fig. 1(a) is a block diagram illustrating a constitution of a vehicle 1 according to one embodiment of this invention.

Fig. 1 (b) is a diagram indicating the state of control of the engine 10 by the controller 60 of the vehicle 1. Fig. 1 (c) is a diagram indicating the state of control of the engine in the vehicle of a comparative example. As the comparative example illustrated in Fig. 1 (c), a state of an engine in a vehicle disclosed in Patent Literature 2 is assumed.

Figs. 1 (b) and (c) both illustrate a relationship between the engine rotation speed (the rotation speed of the power generation electric motor) and the engine torque (the load torque of the power generation electric motor). The outline of the vehicle of the present embodiment is explained with reference to Fig. 1. The vehicle of the present embodiment is a series hybrid-type vehicle in which an engine drives a power generator and the electric power generated by the power generator drives wheels.

The vehicle 1 illustrated in Fig. 1 includes an engine 10, a power generation electric motor 20, an energy storage device 4, a propulsive electric motor 30, a propulsion system 3b, and a controller 60.

The engine 10 has a rotatable crankshaft 15. The engine 10 outputs power generated by the combustion of a mixed gas of air and fuel as the torque and the rotation speed of the crankshaft 15. The power generation electric motor 20 is disposed so as to be linked with the crankshaft 15. The power generation electric motor 20 is driven by the engine 10 to generate electric power. The propulsive electric motor 30 receives the supply of electric power generated by the power generation electric motor 20 and electric power stored as energy in the energy storage device 4 (hereinafter referred to as storage electric power) and drives the propulsion system 3b.

For example, the energy storage device 4 is a battery. The energy storage device 4 stores the electric power generated in the power generation electric motor 20 driven by the engine 10 as energy. The energy storage device 4 supplies the storage electric power to the propulsive electric motor 30.

The vehicle 1 is driven by the propulsive electric motor 30 that has received the supply of the electric power from the power generation electric motor 20 and the energy storage device 4. Specifically, the propulsive electric motor 30 receives the supply of electric power from the power generation electric motor 20 and the energy storage device 4 and outputs rotation power, then the propulsion system 3b receives the output rotation power, and finally, the vehicle 1 is driven by the rotation power.

Next, the operation of the engine 10 by the controller 60 in the vehicle 1 according to the present embodiment is explained, compared with a conventional example explained in Fig. 1 (c). The controller 60 controls the engine 10, the power generation electric motor 20, and the propulsive electric motor 30. Specifically, the controller 60 is configured so as to perform the operations (1) and (2) described below.

The operation (1) includes increasing the rotation speed of the engine 10 by reducing the load torque of the power generation electric motor 20 according to the energy storage amount of the energy storage device 4. The controller 60 reduces the load torque of the power generation electric motor 20 before an acceleration instruction. For example, as illustrated in Fig. 1 (b), the rotation speed of the engine 10 is increased from R1 to R2 (the arrow H4) by reducing the load torque of the power generation electric motor 20 from T3 to T1 in the present embodiment.

The operation (2) includes increasing electric power supplied to the propulsive electric motor 30 by an acceleration instruction as a trigger when the acceleration instruction is outputted. For example, as illustrated in Fig. 1 (b), the power outputted from the engine 10 is increased from P1 to P4 (the arrow H5) for increasing the electric power supplied to the propulsive electric motor 30. Specifically, the engine torque outputted from the engine 10 can be increased by increasing the air and the fuel supplied to the engine 10 while maintaining the engine rotation speed to R2. This increases the power outputted from the engine 10.

Note that, after the engine torque increases as the arrow H5, the engine rotation speed also increases. As a result, the engine rotation speed becomes higher than R2. That is, the operating points (R2, T8) in Fig. 1 (b) shifts further rightward. This further increases the power outputted from the engine 10. However, members connected to the engine 10 and rotating, and the engine 10 itself have inertias. For this reason, increasing the engine rotation speed takes some time.

In contrast, the power increase associated with the increase of the engine torque indicated as the arrow H5 is performed in a short time. Accordingly, the power increases without delay.

In contrast, the controller of the vehicle of the comparative examples increases the rotation speed of the engine without changing the load torque of the power generation electric motor. In the vehicle of the comparative example, the rotation speed of the engine increases by increasing the air and the fuel supplied to the engine. As illustrated in Fig. 1 (c), in the vehicle of the comparative example, the number of rotations of the engine increases from R1 to R2 (the arrow H6) while the load torque of the power generation electric motor is kept to T6, or the number of rotations of the engine increases while the load torque increases from T6.

In the vehicle of the comparative example, the power outputted from the engine is increased for increasing the rotation speed of the engine 10 without changing the load torque of the power generation electric motor before an acceleration instruction. Accordingly, the fuel consumption of the engine increases.

The vehicle 1 of the present embodiment increases the rotation speed of the engine 10 by reducing the load torque of the power generation electric motor 20 before an acceleration instruction. Strictly, the fuel efficiency relative to the output power of the engine 10 decreases by the decrease of the load torque and the increase of the rotation speed. In addition, the fuel consumption increases along with the decrease of the fuel efficiency.

However, when the rotation speed increases by increasing the rotation speed, the increase of the fuel consumption is suppressed compared with the case where the engine rotation speed is increased by increasing the fuel and the air as the comparative example.

That is, the vehicle 1 of the present embodiment does not increase the power outputted from the engine 10, and therefore, the increase of fuel consumption of the engine 10 can be suppressed.

The vehicle 1 of the present embodiment increases the rotation speed of the engine 10 by reducing the load torque of the power generation electric motor 20 before an acceleration instruction. In this case, even when the rotation speed increases, the electric power outputted from the power generation electric motor 20 does not substantially increase. Accordingly, even when the rotation speed increases, the charge and discharge amount with respect to the energy storage device 4 does not substantially change. Accordingly, when the rotation speed increases before an acceleration instruction, for example, the energy storage device 4 becomes fully charged, and the possibility of deterioration of the energy storage device 4 can be reduced. For this reason, the capacity increase of the energy storage device 4 disposed in the vehicle 1 can be suppressed. That is, according to the vehicle 1 of the present embodiment, the margin driving force of the engine 10 can be increased before an acceleration instruction while suppressing the increase in size of the energy storage device 4.

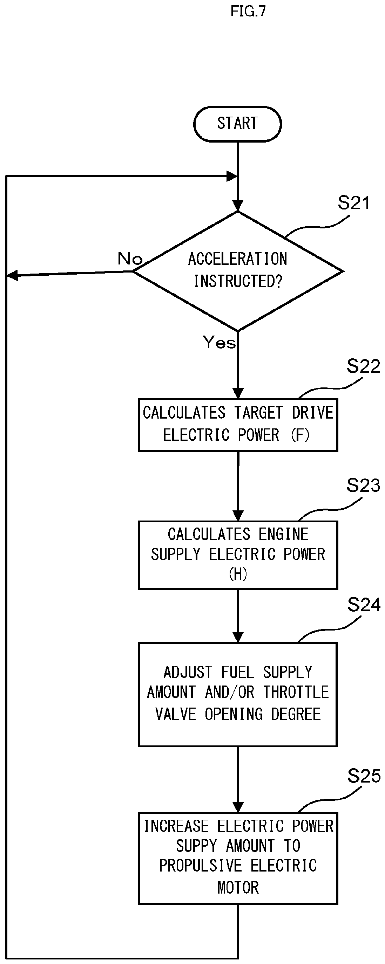

The controller 60 can reduce the load torque of the power generation electric motor 20 at least according to the energy storage amount of the energy storage device 4 before an acceleration instruction (step S21 in Fig. 7) by the operations (1) and (2). This increases the rotation speed of the engine 10. This increases the margin torque and the margin driving force of the engine 10. The margin torque of an engine is a difference between the torque outputted from the engine 10 at a certain point of time (for example, T1 at the rotation speed R2) and the maximum torque (for example, T8) outputtable from the engine 10 at a rotation speed (for example, R2) at that point of time. The margin driving force of the engine 10 refers to a difference between the power outputted from the engine 10 of the vehicle 1 at a certain point of time (for example, P 1 at the rotation speed R2) and the maximum power (for example, P4 corresponding to T8) outputtable from the engine 10 at a rotation speed (for example, R2) at that point of time.

Increased margin driving force of the engine 10 enables the following rapid increase of the engine output along with the increase of the engine torque without waiting for further increase of the rotation speed when the fuel and air amounts supplied to the engine 10 increases by an acceleration instruction as a trigger.

This enables the controller 60 to supply the electric power corresponding to the target power to the propulsive electric motor 30 utilizing the increase of the output of the power generation electric motor 20 by an acceleration instruction as a trigger even when the energy storage amount of the energy storage device 4 is relatively low. As a result, the propulsive electric motor 30 outputs target power according to an acceleration instruction in a short time. That is, the propulsive electric motor 30 can output target power according to an acceleration instruction regardless of the energy storage amount of the energy storage device 4.

Even when the energy storage amount of the energy storage device 4 decreases, the power outputted from the propulsive electric motor 30 by an acceleration instruction as a trigger reaches the target power in a short time. Specifically, the power outputted from the propulsive electric motor 30 can reach the target power in a shorter time compared with a case where, for example, the engine rotation speed of the engine 10 is not increased (for example, the transition indicated as the arrow H1) before an acceleration instruction. Accordingly, the reproducibility of the responsiveness of an acceleration instruction of a vehicle to an acceleration instruction is high regardless of the energy storage amount of the energy storage device 4.

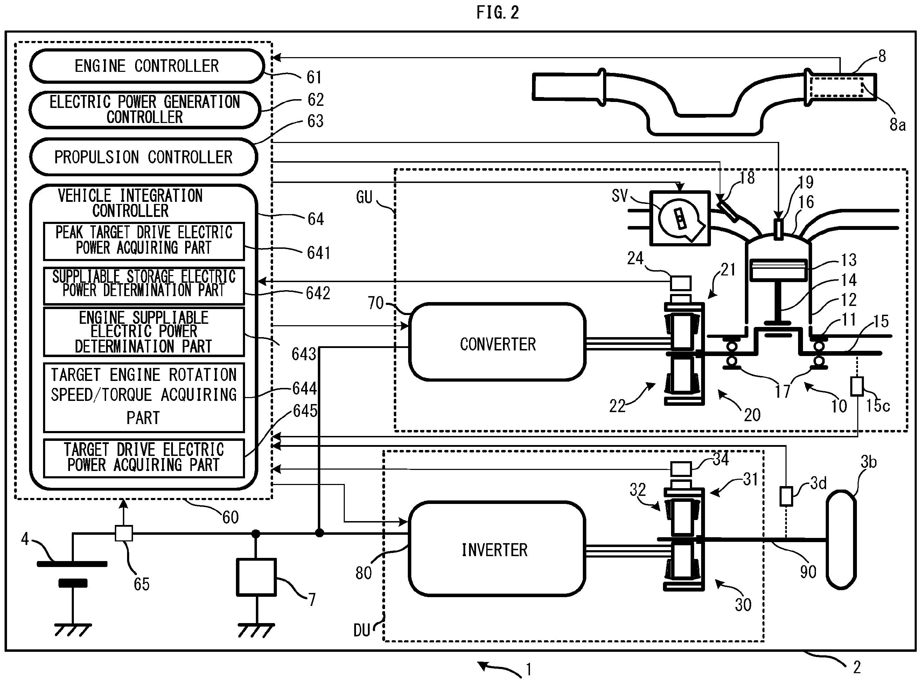

Fig. 2 is a schematic diagram indicating each relationship among the main constituents of the vehicle 1 in Fig. 1. The vehicle 1 illustrated in Fig. 2 includes a body 2 and a propulsion system 3b rotatably attached to the body 2. The vehicle 1 includes a power generation unit GU, a driving unit DU, a controller 60, and an energy storage device 4. For example, the vehicle 1 is a straddled vehicle. The propulsion system 3b is a driving wheel driven by the propulsive electric motor 30.

The power generation unit GU is mounted on the body 2 and includes an engine 10, a power generation electric motor 20, and a converter 70. The driving unit DU is mounted on the body 2 and includes a propulsive electric motor 30 and an inverter 80. The vehicle 1 includes a headlight 7 and a propulsion instruction part 8. The propulsion instruction part 8 is an accelerator grip for accelerating and decelerating the vehicle 1 by a driver. The propulsion instruction part 8 is provided with an accelerator sensor 8a. The controller 60 controls throttle valve SV provided in the engine 10, a fuel jetting device 18, a power generation electric motor 20, and a propulsive electric motor 30 on the basis of the instruction from the propulsion instruction part 8. The controller 60 adjusts the electric power supplied from the power generation electric motor 20 and the energy storage device 4 to the propulsive electric motor 30 according to an acceleration instruction outputted from the propulsion instruction part 8 as an acceleration instruction part. The controller 60 adjusts the fuel jetting device 18 and the throttle valve SV such that the amounts of the fuel and the air supplied to the engine 10.

The engine 10 of the power generation unit GU includes a crankcase 11, a cylinder 12, a piston 13, a connecting rod 14, and a crankshaft 15. The piston 13 is disposed in a cylinder 12 in a reciprocatingly movable manner. The crankshaft 15 is rotatably disposed in the crankcase 11. The connecting rod 14 connects the piston 13 and the crankshaft 15. A cylinder head 16 is attached to the top of the cylinder 12. A combustion chamber is defined by a cylinder 12, a cylinder head 16, and a piston 13. The crankshaft 15 is supported in a rotatable manner by the crankcase 11 via a pair of bearings 17. A power generation electric motor 20 is attached to the crankshaft 15.

The engine 10 includes a throttle valve SV, a fuel jetting device 18, and an ignition plug 19. The throttle valve SV adjusts the amount of air supplied to the combustion chamber. The fuel jetting device 18 supplies fuel to the air supplied to the combustion chamber by the throttle valve SV by jetting the fuel. A mixed gas of air and fuel is supplied to the combustion chamber. The supply of the fuel by the fuel jetting device 18 and the opening degree of the throttle valve SV are controlled by the controller 60. The ignition plug 19 burns the air-fuel mixture supplied to the combustion chamber.

The engine 10 outputs power via the crankshaft 15. The power outputted via the crankshaft 15 is converted into electric power by the power generation electric motor 20. The electric power converted by the power generation electric motor 20 is supplied to the propulsive electric motor 30 and outputted as rotation power again. The power outputted from the propulsive electric motor is transmitted to the propulsion system 3b. In the vehicle 1, the engine 10 and the propulsion system 3b are not mechanically connected. For this reason, the engine 10 does not directly drive the propulsion system 3b. That is, the power of the engine 10 is not directly transmitted to the propulsion system 3b.

The power generation electric motor 20 of the power generation unit GU is, for example, a permanent magnet three-phase brushless-type power generator. The power generation electric motor 20 includes a rotor 21 and a stator 22. The power generation electric motor 20 in the present embodiment is a radial gap motor. The power generation electric motor 20 is an outer rotor motor. That is, the rotor 21 is an outer rotor. The stator 22 is an inner stator.

The rotor position detection device 24 is a device that detects the position of the rotor 21.

The power generation electric motor 20 is connected to the crankshaft 15 of the engine 10 so as to operate in conjunction with the crankshaft 15. Specifically, the rotor 21 is connected to the crankshaft 15 so as to rotate at a fixed speed ratio in relation to the crankshaft 15. The power generation electric motor 20 is driven by the engine 10 and generates electric power when the engine 10 performs combustion operation. Specifically, the piston 13 of the engine 10 moves vertically by the combustion operation and rotates the crankshaft 15. The power generation electric motor 20 generates electric power by the rotor 21 rotating around the stator 22 in conjunction with the crankshaft 15.

In the present embodiment, the rotor 21 is attached to the crankshaft 15, not via a power transmission mechanism (for example, a belt, a chain, a gear, a speed reducer, a speed increaser, and the like). The rotor 21 rotates at a speed ratio of 1:1 with respect to the crankshaft 15. The power generation electric motor 20 is configured to positively rotate the crankshaft 15 by the positive rotation of the engine 10.

In the present embodiment, the power generation electric motor 20 is connected to the crankshaft 15, not via a speed-variable transmission or a clutch. That is, the power generation electric motor 20 is connected to the crankshaft 15, not via a device in which the input/output speed ratio is variable. Note that the power generation electric motor 20 may be attached to the crankshaft 15 via a power transmission mechanism.

The propulsive electric motor 30 of the driving unit DU is a permanent magnet three-phase brushless motor. The propulsive electric motor 30 includes a rotor 31 and a stator 32. The propulsive electric motor 30 in this embodiment is a radial gap motor. The propulsive electric motor 30 is an outer rotor motor. That is, the rotor 31 is an outer rotor. The stator 32 is an inner stator. The rotation axis of the propulsive electric motor 30 is placed in a direction orthogonal to the vehicle traveling direction. The apical part of the rotating shaft of the propulsive electric motor 30 is connected to a drive shaft 90 disposed parallel with the rotation shaft of the propulsive electric motor 30.

The propulsive electric motor 30 operates by the electric power supplied from the power generation electric motor 20 and/or the energy storage device 4. When the current outputted by the power generation electric motor 20 increases, the current supplied from the converter 70 to the inverter 80 increases, and the current supplied to the propulsive electric motor 30 increases. The electric power outputted by the power generation electric motor 20 is supplied to the propulsive electric motor 30 via a converter 70 and an inverter 80.

The propulsion system 3b of the driving unit DU includes a drive shaft 90. The drive shaft 90 is an axle of the propulsion system 3b. The drive shaft 90 is directly or indirectly connected to the propulsive electric motor 30 such that the rotation power can be transmitted to the propulsion system 3b via the propulsive electric motor 30. Specifically, the rotor 31 of the propulsive electric motor 30 is connected to the drive shaft 90 directly or via a decelerator or the like. The propulsion system 3b is rotatably driven by the propulsive electric motor 30. Due to this operation, the propulsive electric motor 30 runs the vehicle 1. Regarding the power transmission, the propulsive electric motor 30 is not mechanically connected to the engine 10 and the power generation electric motor 20.

A vehicle speed sensor 3d is disposed on the drive shaft 90 of the propulsion system 3b. The vehicle speed sensor 3d outputs signals of frequencies according to the rotation speed of the drive shaft 90. The controller 60 calculates a vehicle speed on the basis of the output signal from the vehicle speed sensor 3d.

The power generation unit GU includes a converter 70. The power generation electric motor 20 and the energy storage device 4 are connected to the converter 70. The energy storage device 4 sends and receives current to/from the power generation electric motor 20. The converter 70 includes a plurality of switching parts (not illustrated). Each of the switching parts has a switching element. For example, the switching element is a transistor. More specifically, the switching part is a FET (Field Effect Transistor). The switching parts constitute a three-phase bridge inverter.

The plurality of switching parts switch the passage and the block of the current between a plurality of phases of stator windings 22b and the energy storage device 4 and/or the propulsive electric motor 30. Specifically, the passage and block of the current between each of the stator windings 22b and the energy storage device 4 and/or the propulsive electric motor 30 are switched by the on/off operation of the switching parts of the power generation electric motor 20. By sequentially switching the on and off of the switching parts, the three-phase alternating current outputted from the power generation electric motor 20 is rectified, and the voltage is controlled.

A current sensor (not illustrated) is disposed on a line connecting the converter 70 and the stator windings 22b and detects the current of the two phases of the power generation electric motor 20.

The driving unit DU includes an inverter 80. The propulsive electric motor 30, the converter 70, and the energy storage device 4 are connected to the inverter 80. The energy storage device 4 supplies the storage electric power to the propulsive electric motor 30. The inverter 80 includes a plurality of switching parts (not illustrated).

The controller 60 controls each part of the vehicle 1, including the inverter 80.

The headlight 7 is connected to the electric energy storage device 4. The headlight 7 is an auxiliary machine operating while consuming the electric power and mounted on the vehicle 1. A current and voltage sensor 65 is disposed on lines connecting a battery, which is the energy storage device 4, and the converter 70 and the inverter 80. The current and voltage sensor 65 detects the current flown into the battery, which is the energy storage device 4, and the voltage. The current and voltage sensor 65 is disposed between the branch point to the headlight 7 and the energy storage device 4 out of the lines connecting the energy storage device 4 to the converter 70 and the inverter 80.

The controller 60 is constituted of a computer having a central processing unit (not illustrated) and a storage device (not illustrated). The central processing unit performs arithmetic processing on the basis of a control program. The storage device stores data relating to programs and arithmetic operations. The controller 60 includes an engine controller 61, an electric power generation controller 62 and a propulsion controller 63, and a vehicle integration controller 64.

The throttle valve SV, the fuel jetting device 18, and the ignition plug 19 are connected to the engine controller 61. The engine controller 61 controls the combustion operation of the engine 10 by controlling the throttle valve SV, the ignition plug 19, and the fuel jetting device 18. The engine controller 61 controls the rotation power of the engine 10 by controlling the combustion operation of the engine 10.

The power generation controller 62 controls the converter 70 to control the operation of the power generation electric motor 20. The propulsion controller 63 controls the inverter 80 to control the operation of the propulsive electric motor 30.

The vehicle integration controller 64 controls the engine controller 61, the power generation controller 62, and the propulsion controller 63 on the basis of the acceleration instruction outputted from the propulsion instruction part 8 and the vehicle speed acquired from the vehicle speed sensor 3d. Specifically, the vehicle integration controller 64 controls the ignition plug 19, the fuel jetting device 18, and the throttle valve SV of the engine 10 via the engine controller 61 according to an acceleration instruction of the propulsion instruction part 8 as the acceleration instruction part. The vehicle integration controller 64 adjusts the storage electric power supplied from the energy storage device 4 to the propulsive electric motor 30 via the propulsion controller 63. Furthermore, the vehicle integration controller 64 controls the power generation controller 62 and the propulsion controller 63 on the basis of the voltage value and the current value of the battery, which is the energy storage device 4, acquired from the current and voltage sensor 65.

The vehicle integration controller 64 includes a peak target drive electric power acquiring part 641, a suppliable storage electric power determination part 642, an engine suppliable electric power determination part 643, a target engine rotation speed/torque acquiring part 644, and a target drive electric power acquiring part 645.

The peak target drive electric power acquiring part 641 acquires a peak target drive electric power of the propulsive electric motor 30. Specifically, the peak target drive electric power acquiring part 641 acquires a peak target drive electric power of the propulsive electric motor 30 on the basis of the signals from the accelerator sensor 8a and the vehicle speed sensor 3d.

The suppliable storage electric power determination part 642 acquires a storage electric power suppliable from the energy storage device 4 to the propulsive electric motor 30. Specifically, the suppliable storage electric power determination part 642 acquires the voltage value and the current value of a battery, which is the energy storage device 4, on the basis of the detection result outputted from the current and voltage sensor 65. For example, the suppliable storage electric power determination part 642 acquires the charge amount (State Of Charge: SOC) of the battery, which is an energy storage amount of the energy storage device 4, by integrating the current value. The suppliable storage electric power determination part 642 acquires the suppliable storage electric power of the energy storage device 4 from the acquired energy storage amount (battery charge amount: SOC) of the energy storage device 4. The way of acquiring the suppliable storage electric power in the suppliable storage electric power determination part 642 is not limited to this, and the suppliable storage electric power of the energy storage device 4 may be estimated according to a voltage applied to the propulsive electric motor 30 and a rotation speed.

The engine suppliable electric power determination part 643 acquires the current value when the engine outputtable power at a current engine rotation speed of the engine 10 is converted into electric power by the power generation electric motor 20. Specifically, the engine suppliable electric power determination part 643 calculates the engine outputtable power at a current engine rotation speed of the engine 10 obtained on the basis of the electric signals from the crankshaft rotation speed sensor 15c. The engine outputtable power is an engine power that can be outputted by the engine 10 itself when the fuel supply amount by the fuel jetting device 18 of the engine 10 is maximized and the throttle valve SV is fully opened at the current engine rotation speed of the engine 10. The engine suppliable power indicates the outputting ability of the engine 10 at the maximum fuel supply amount by the fuel jetting device 18 of the engine 10 and the fully opened throttle valve SV. The engine suppliable electric power determination part 643 calculates the current value obtained by converting the calculated engine outputtable power of the engine 10 into electric power by the power generation electric motor 20.

The target engine rotation speed/torque acquiring part 644 acquires an engine rotation speed and an engine torque of the engine 10 enabling the propulsive electric motor 30 to supply the peak target drive electric power. Specifically, the target engine rotation speed/torque acquiring part 644 determines a target engine rotation speed and a target engine torque on the basis of the peak target drive electric power, the suppliable storage electric power, and the engine suppliable electric power.

The target drive electric power acquiring part 645 acquires electric power that the propulsive electric motor 30 requires for increasing the output corresponding to an acceleration instruction. Specifically, the target drive electric power acquiring part 645 determines the electric power that the propulsive electric motor 30 requires on the basis of an acceleration instruction of the propulsion instruction part 8. The electric power that the propulsive electric motor 30 requires is the electric power required for increasing the output corresponding to an acceleration instruction of the propulsion instruction part 8.

The controller 60 is constituted of a computer having a central processing unit (not illustrated) and a storage device (not illustrated). The central processing unit performs arithmetic processing on the basis of a control program. The storage device stores data relating to programs and arithmetic operations.

The engine controller 61, the power generation controller 62, the propulsion controller 63, and the vehicle integration controller 64 are implemented by a computer (not illustrated) and control programs executed in the computer. Accordingly, the operations performed by each of the engine controller 61, the power generation controller 62, the propulsion controller 63, and the vehicle integration controller 64 described below are referred to as the operation of the controller 60. Note that the engine controller 61, the power generation controller 62, the propulsion controller 63, and the vehicle integration controller 64 are electrically connected and, for example, may be configured as mutually independent devices placed in mutually separated positions or may be configured integrally.

Next, the operation of the controller 60 of the vehicle 1 according to the present embodiment is explained in detail. The propulsive electric motor 30 receives electric power from the energy storage device 4 and/or the power generation electric motor 20. For example, when the increase of a target power outputted from the propulsive electric motor 30 is required by an acceleration instruction, the controller 60 increases the electric power supplied from the energy storage device 4 and the power generation electric motor 20 to the propulsive electric motor 30 toward target power. Due to this operation, the controller 60 increases the power outputted from the propulsive electric motor 30.

In particular, the controller 60 increases the power outputted from the engine 10 when rapid acceleration is instructed. When the power outputted from the engine 10 is increased, the power generation amount by the power generation electric motor 20 increases, and therefore, the electric power supplied from the power generation electric motor 20 to the propulsive electric motor 30 increases. Due to these operations, the propulsive electric motor 30 can output target power when acceleration is instructed. However, the power for supplying the electric power corresponding to an acceleration instruction to the propulsive electric motor may not be possible to output, or the output of power for supplying the electric power to the propulsive electric motor may be delayed in some cases, depending on the rotation speed of the engine 10 of the power generation unit GU. In particular, when the engine rotation speed of the engine 10 is low, the engine 10 cannot instantly output a target power, or the output of the power from the engine 10 is delayed. Accordingly, in such a case, in response to an acceleration instruction, the propulsive electric motor 30 cannot output the power corresponding to the acceleration instruction, or the output of the power corresponding to the acceleration instruction is delayed.

At this time, it is conceivable that the controller 60 controls the storage electric power of the energy storage device 4 to be held as the electric power for outputting the target power from the propulsive electric motor 30 when acceleration is instructed. When the energy storage amount in the energy storage device is sufficient, storage electric power suppliable from the energy storage device 4 to the propulsive electric motor 30 when acceleration is instructed increases. Thus, the vehicle 1 can make the responsiveness of output have reproducibility without deteriorating the fuel efficiency. This type of energy storage can be sufficiently achieved by, for example, a battery with a large capacity. However, a battery, which is the energy storage device mounted on the vehicle 1, is required to be decreased in size as possible. A small energy storage device is difficult to always hold the storage electric power of the energy storage device when acceleration is instructed.

Thus, in the present embodiment, the controller 60 increases the rotation speed of the engine 10 by reducing the power generation torque of the power generation electric motor 20 according to the reduction amount of the electric power from the fully charged capacity. In this case, since the torque outputted from the engine 10 decreases, the power outputted from the engine 10 is suppressed compared with, for example, the increase of the rotation speed due to the increase of fuel.

Here, in an engine, the difference between the engine power at a certain fuel supply amount and throttle opening degree and the engine power at the maximum fuel supply amount in a state where the accelerator is fully opened refers to a margin driving force. That is, the margin driving force is a difference between the power outputted from the engine before the acceleration instruction and at a point of time before output increase and the maximum power outputtable from the engine at a rotation speed at a point of time before output increase. The margin driving force means a torque margin that can be instantly increased.

When the margin driving forces are compared in two different conditions of low rotation/high load (high throttle opening degree) and high rotation/low load (low throttle opening degree) under the identical engine power condition, the latter has a greater margin driving force than the former. For this reason, the engine power instantly outputtable in the latter condition is larger than that in the former condition. The vehicle 1 of the present embodiment increases the engine rotation speed of the engine 10 before an acceleration instruction when the storage electric power of the energy storage device 4 decreases. Accordingly, the margin driving force is large. Accordingly, target power can be outputted without waiting for the increase of the engine rotation speed of the engine 10 when acceleration is instructed even when the storage electric power of the energy storage device 4 decreases. This is because, when acceleration is instructed, the rotation speed of the engine 10 is increased in advance. Thus, the margin driving force, that is, the torque margin that can be instantly increased is large. Therefore, the vehicle 1 of the present embodiment has increased responsiveness of acceleration of the vehicle to an acceleration instruction. Accordingly, the engine 10 has a reproducibility of the responsiveness of an acceleration instruction of a vehicle to an acceleration instruction.

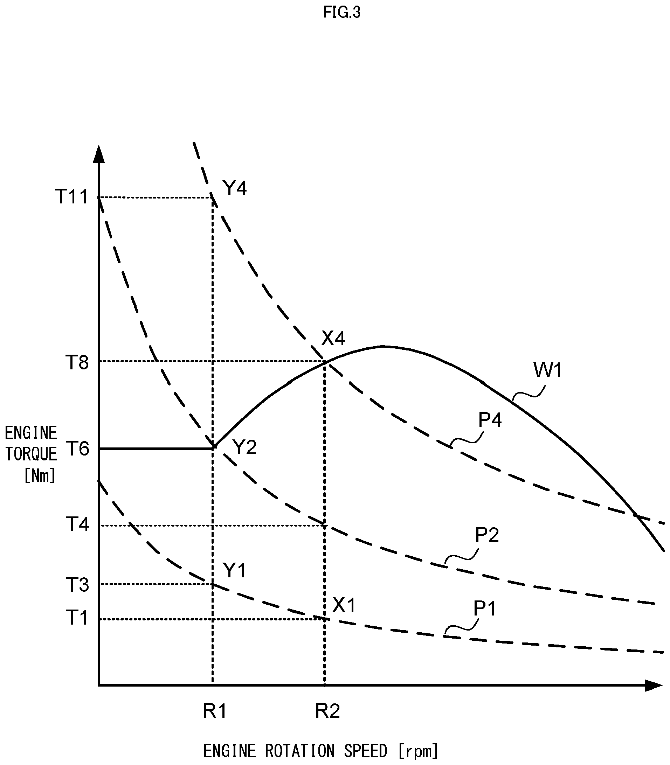

The margin driving force is now explained with reference to Fig. 3. Fig. 3 is a diagram indicating a relationship between the engine rotation speed and the engine torque of the engine 10 of the power generation unit GU in the present embodiment. The power is proportional to a product of a rotation speed and a torque.

The margin driving force refers to a difference between engine power determined from a certain engine rotation speed and a certain engine torque and a maximum rotation power outputted from the engine at an identical rotation speed to the above engine rotation speed. The margin driving force means power that can be instantly increased.

For example, as illustrated in Fig. 3, the engine rotation speed is R2 [rpm], and the engine torque is T1 [Nm] (operating point X1) at the operating point X1 of the engine 10 at a certain opening degree of the throttle valve SV of the engine 10. At this time, the engine torque increases to T8 [Nm] (operating point X4) when the opening degree of the throttle valve SV is maximized while the engine rotation speed is held to R2 [rpm]. Accordingly, the margin driving force at this time is P4 - P1, obtained by subtracting P1 (= $T1 \times R2 \times \alpha$) [W] from P4 (= $T8 \times R2 \times \alpha$) [W]. The value P4 - P1 is $(T8-T1) \times R2 \times \alpha$ [W] (wherein $\alpha$ is a constant that serves as a correction value from [rpm] × [Nm] to [W]).

Here, the margin driving force of the engine 10 differs depending on the engine rotation speed. The margin driving force tends to be smaller as the engine rotation speed is lower at least in an engine rotation speed region equal or lower than the rotation speed Rmax, at which the engine generates the maximum output. This is because the engine power at the maximum opening degree of the throttle valve is restricted by the Wide-Open-Throttle (hereinafter referred to as WOT) curve W1 in Fig. 3. The WOT curve is a curve representing a relationship between the engine rotation speed and the engine torque that can be outputted by the engine itself when the throttle valve is fully opened and the fuel supply is maximized. In a certain running state (at a certain engine rotation speed), the engine torque cannot exceed the WOT curve W1 even if the throttle valve is fully opened and the fuel supply is maximized. The WOT curve is a unique characteristic that each individual engine has. Also, in the explanation hereinbelow, cases where the engine rotation speed is not larger than the engine maximum output rotation speed Rmax are explained.

For example, an operating point, at which the engine rotation speed is R1 [rpm] and the engine torque is T3 [Nm] under a certain engine condition, is taken as an operating point Y1. In addition, an operating point, at which the engine rotation speed is R2 [rpm] and the engine torque is T1 [Nm] under a certain engine condition, is taken as an operating point X1. At this time, the engine power at the operating point Y1 and the engine power at the operating point X1 are both P1[W] (represented by the dotted line P1 in Fig. 3). The dotted line indicated as P1 represents a combination of speeds and torques when the power P1 is obtained. The dotted line indicated as P1 is an equal output line. The dotted lines indicated as P2 and P4 are equal output lines when power different from the power P1 is obtained.

When the throttle valve is fully opened at the operating point X1, the engine power rises from P1 to P4 (operating point X4). On the contrary, when the throttle valve SV is fully opened at the operating point Y1, the power outputted by the engine 10 hits a peak at P2 overlapping with the WOT curve W1 (operating point Y2). At this time, the engine torque hits a peak at T6. Accordingly, the engine power of the engine 10 does not rise at the operating point Y1 as high as at the operating point X1. Accordingly, the responsiveness of the increase of the engine power to an acceleration instruction of the propulsion instruction part 8 unfortunately lowers.

For this reason, under the two different conditions of low rotation/high load (high throttle opening degree) and high rotation/low load (low throttle opened degree), the latter has a greater margin driving force than the former when mutually equal power is outputted. Therefore, the engine power instantly outputtable according to the opening of the throttle valve in the latter is larger than that in the former. That is, the responsiveness of acceleration instruction when the engine rotation speed is low is not as high as the responsiveness of the acceleration instruction when the engine rotation speed is high. Note that the instantly outputtable engine power is engine power outputtable without waiting for the increase of the engine rotation speed according to the opening of the throttle valve.

The vehicle 1 of the present embodiment converts the power outputted from the engine 10 into electric power by the power generation electric motor 20. The vehicle 1 supplies electric power converted by the power generation electric motor 20 to the propulsive electric motor 30 with the storage electric power stored in the energy storage device 4. In the vehicle 1, electric power is supplied from the energy storage device 4 to the propulsive electric motor 30 when the propulsion instruction part 8 is operated to a maximum position in a state where the engine rotation speed is low. When the engine rotation number is small, the margin driving force is small, and therefore, the electric power converted by the power generation electric motor is also small. The power outputted from the propulsive electric motor 30 increases when a shortage of the electric power supplied from the power generation electric motor 20 to the propulsive electric motor 30 is supplied from the energy storage device 4. Therefore, the responsiveness of acceleration of the vehicle 1 to an acceleration instruction increases.

When the responsiveness of output to acceleration instruction is made to have reproducibility, setting the peak target drive electric power (A) clarifies how much supply of the storage electric power from the energy storage device is required when the maximum output is requested by an acceleration instruction. The peak target drive electric power (A) is a target value of the sum of the electric power obtained by converting, by a power generation electric motor engine, the power outputtable from an engine without waiting for the increase of the engine rotation speed when the throttle valve is fully opened and the storage electric power outputtable by an energy storage device.

Meanwhile, the drive upper-limit electric power is electric power of the sum of the electric power obtained by converting the power currently outputtable from an engine without waiting for the increase of the engine rotation speed and the storage electric power outputtable by an energy storage device. The drive upper-limit electric power indicates the current ability of the engine 10. If the peak target drive electric power (A) is equal to or lower than the drive upper-limit electric power, at least the power according to the peak target drive electric power (A) is outputted from the propulsive electric motor 30 when the throttle valve is fully opened.

The peak target drive electric power is set according to the current vehicle speed of a vehicle and a current opening degree of a throttle valve.

The propulsive electric motor of a driving unit receives electric power from the power generation electric motor and/or the energy storage device and outputs power. For this reason, the power outputted from the propulsive electric motor is susceptible to the energy storage state of the energy storage device. That is, the upper-limit power outputtable from the propulsive electric motor is susceptible to the charging state. For example, if the energy storage amount of the energy storage device when the accelerator grip is operated to the maximum position is small, the electric power supplied from the power generation electric motor and/or energy storage device to the propulsive electric motor is short. Accordingly, the propulsive electric motor cannot obtain sufficient driving force.

In the vehicle 1 of the present embodiment, the above problems are solved by increasing the engine rotation speed according to the energy storage amount of the energy storage device 4 before an acceleration instruction (during ordinary running). Specifically, the above problems are solved by the controller 60 performing the operations in the flowchart illustrated in Fig. 3.

Next, the operation of the controller 60 mounted on the vehicle 1 of the present embodiment is explained. Fig. 3 is a flowchart explaining the operation of the controller 60 on the vehicle 1. The operations illustrated in the flow chart of Fig. 3 are executed during the vehicle running. First, in the step S11, the peak target drive electric power acquiring part 641 of the controller 60 acquires a peak target drive electric power (A) of the propulsive electric motor 30. The peak target drive electric power acquiring part 641 of the controller 60 calculates the peak target drive electric power (A) on the basis of the vehicle speed acquired from the vehicle speed sensor 3d and the position of the propulsion instruction part 8.

Next, in the step S12, the suppliable storage electric power determination part 642 of the controller 60 acquires the suppliable storage electric power (B) of the energy storage device 4. The suppliable storage electric power (B) of the energy storage device 4 is calculated from the energy storage amount of the energy storage device 4. Specifically, for example, the suppliable storage electric power determination part 642 of the controller 60 acquires the voltage value and the current value of the energy storage device 4 on the basis of the detection result outputted from the current and voltage sensor 65. The suppliable storage electric power determination part 642 acquires the energy storage amount (battery charge amount: SOC) of the energy storage device 4 by integrating the acquired current value. The suppliable storage electric power determination part 642 calculates a suppliable storage electric power (B) from the acquired SOC of the energy storage device 4. For calculating the suppliable storage electric power (B), a reference table having a relationship between the energy storage amount (battery charge amount: SOC) of the energy storage device 4 and the suppliable storage electric power from the energy storage device 4, stored in the storage device of the controller 60, is used.

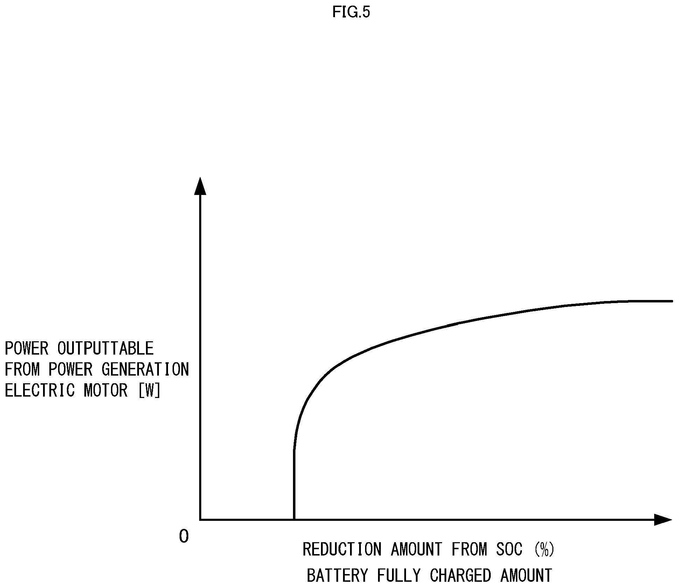

Fig. 5 is a diagram indicating a relationship between the full charge capacity and the suppliable storage electric power (B) of a battery. The suppliable storage electric power (B) is an upper limit value of electric power that can be supplied from a battery to a propulsive electric motor determined depending on an acquired battery charge amount (SOC). When the battery charge amount (SOC) is in a low state, that is, when the reduction amount from the full charge capacity of a battery is high, the suppliable storage electric power (B) also becomes small.

However, the suppliable storage electric power (B) may be affected by the voltage and the battery temperature. For that reason, the way of acquiring the suppliable storage electric power (B) of the energy storage device 4 in the present embodiment is not limited to a method including acquiring the voltage value and the current value of the energy storage device 4 (battery) and calculating the battery charge amount (SOC). Acquiring the suppliable storage electric power (B) may include, for example, correcting the value obtained by measuring the temperature of the energy storage device 4, in addition to calculating the battery charge amount (SOC). In this case, the values of Fig. 5 are modified and used.

In the step S13 of Fig. 3, the engine suppliable electric power determination part 643 of the controller 60 acquires the engine suppliable electric power (C) of the engine 10 at the current rotation speed. The engine suppliable electric power (C) of the engine 10 at the current rotation speed is a value of the electric power outputted by the power generation electric motor 20, to which the maximum power that can be outputted instantly (without the increase of the rotation speed) by the engine 10 at the current rotation speed. That is, the engine suppliable electric power (C) represents the ability of the engine 10 at the current rotation speed. The engine suppliable electric power (C) can be determined from the engine torque corresponding to the current engine rotation speed on the WOT curve W1. The storage device in the controller 60 stores a reference table having a relationship between the engine rotation speed and the engine torque on the WOT curve W1. The engine suppliable electric power determination part 643 acquires an engine suppliable electric power (C) of the engine 10 at the current rotation speed using the reference table stored in the storage device.

Here, in the step S14, the vehicle integration controller 64 of the controller 60 compares the peak target drive electric power (A) with the sum of the suppliable storage electric power (B) of the energy storage device 4 and the engine suppliable electric power (C) at the current engine rotation speed. In other words, the vehicle integration controller 64 determines, for example, whether the peak target drive electric power (A) of the driving unit DU can be obtained when the throttle valve is fully opened.

If the electric power (A) is equal to or smaller than the sum of the electric power (B) and the electric power (C) (Yes in S14), the driving unit DU can instantly supply the peak target drive electric power to the propulsive electric motor 30 according to the operation at the maximum operation amount in the propulsion instruction part 8. In the step S14, if it is determined that the electric power (A) is equal to or smaller than the sum of the electric power (B) and the electric power (C) (Yes in S14), the operations return to the step S11.

In contrast, if the electric power (A) is larger than the sum of the electric power (B) and the electric power (C) (No in S14), the driving unit DU cannot instantly supply the peak target drive electric power to the propulsive electric motor 30 even if the throttle valve is fully opened. This represents a phenomenon that occurs when the suppliable storage electric power (B) of the energy storage device 4 decreases, that is, when the SOC of a battery, which is an energy storage device, is low. When the SOC decreases, the suppliable storage electric power (B) of the energy storage device 4 is small. Accordingly, the propulsive electric motor 30 cannot receive the supply of the electric power corresponding to the operation amount under a condition where the operation amount of the propulsion instruction part 8 is maximized even if the power generation electric motor 20 converts the maximum power outputted from the engine 10 into electric power.

In the step S14, suppose that the electric power (A) is determined larger than the sum of the electric power (B) and the electric power (C) (No in S14). In this case, in the step S15, the target engine rotation speed/torque acquiring part 644 of the vehicle integration controller 64 acquires the target engine rotation speed and the target engine torque of the engine 10.

Acquiring the target engine rotation speed in the step S15 is performed in the following manner. First, the target engine rotation speed/torque acquiring part 644 determines the difference between the electric power (A) acquired in the step S11 and the electric power (B) acquired in the step S12. The determined value is taken as the modified electric power (D). Next, the target engine rotation speed/torque acquiring part 644 calculates the power (modified power) that should be outputted by the engine 10 in order for the power generation electric motor 20 to output the modified electric power (D). The target engine rotation speed/torque acquiring part 644 determines the engine rotation speed corresponding to the intersection of the equal output line of the modified power and the WOT curve W1 in the graph of Fig. 3. Determined engine rotation speed serves as a target engine rotation speed.

Acquiring the target engine torque in the step S15 is performed in the following manner. The target engine rotation speed/torque acquiring part 644 determines the engine torque corresponding to the intersection of the equal rotation speed line of the calculated target engine rotation speed and the equal output line of the power currently outputted by the engine 10 in the flow chart of Fig. 3. Determined engine torque serves as a target engine torque.

In the step S16, the controller 60 changes the engine rotation speed and the engine torque of the engine 10 according to the calculated target engine rotation speed and the target engine torque. Specifically, the power generation controller 62 changes the engine rotation speed of the engine 10 by changing the load torque outputted from the power generation electric motor 20 so as to match with the calculated target engine torque, thereby changing. By the processing in the step S16, the engine rotation speed of the engine 10 increases so as to be larger than the engine rotation number calculated when the SOC is in a fully charged state. In contrast, the torque of the engine 10 decreases so as to be smaller than the engine torque calculated when the SOC is in a fully charged state. That is, the power generation controller 62 increases the engine rotation speed of the engine 10 by reducing the load torque of the power generation electric motor 20. The margin driving force increases as the engine rotation speed increases.

After the power generation controller 62 changes the engine rotation speed and the engine torque of engine 10 in the step S16, the operations return to the step S11.

According to the operations indicated in the flowchart of Fig. 3, the controller 60 changes the engine rotation speed of the engine 10 according to the energy storage amount of the energy storage device 4 before an acceleration instruction. As a result, the sum of the suppliable storage electric power (B) at a point of time before an acceleration instruction and the engine suppliable electric power (C) at a point of time before an acceleration instruction equals a peak target drive electric power (A) regardless of the energy storage amount of the energy storage device 4. Accordingly, the power outputted from the propulsive electric motor 30 can be increased to a target power according to an acceleration instruction when acceleration is instructed regardless of the energy storage amount of the energy storage device 4.

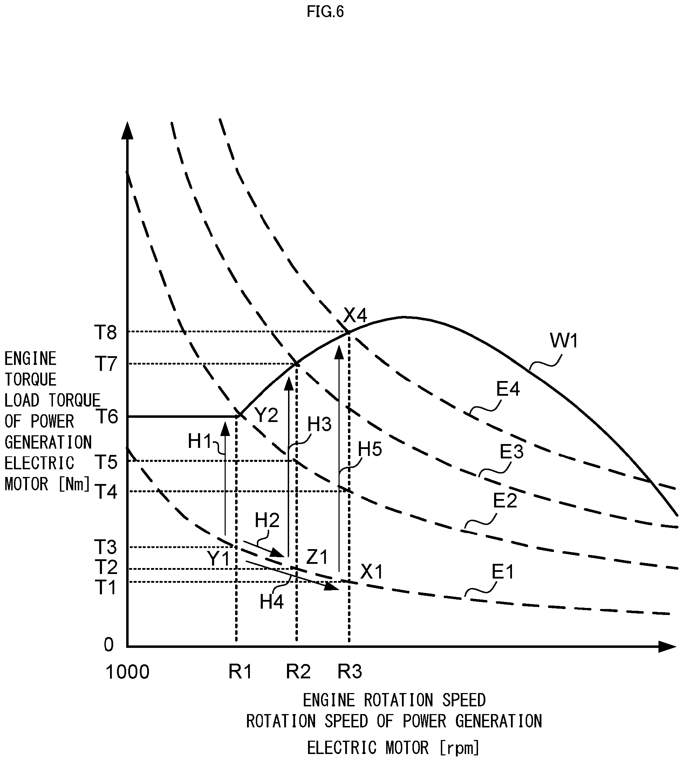

Fig. 6 is a diagram showing an example of the relationship between the engine rotation speed (the rotation speed of the power generation electric motor 20) and the engine torque (the load torque of the power generation electric motor 20) of the engine 10 and the electric power outputted from the power generation electric motor 20. The operations explained with reference to the flow chart of Fig. 3 are explained together with an example of the engine rotation speed and the engine torque illustrated in Fig. 6. Here, dotted curves E1 to E4 in Fig. 6 are sets of points (equal electric power lines) at which the electric power when the power outputted from the engine 10 is converted to the electric power by the power generation electric motor 20 becomes E1 to E4, respectively. Note that the equal electric power lines E1 to E4 in Fig. 6 correspond to equal output lines P1 to P4 in Fig. 3, respectively.

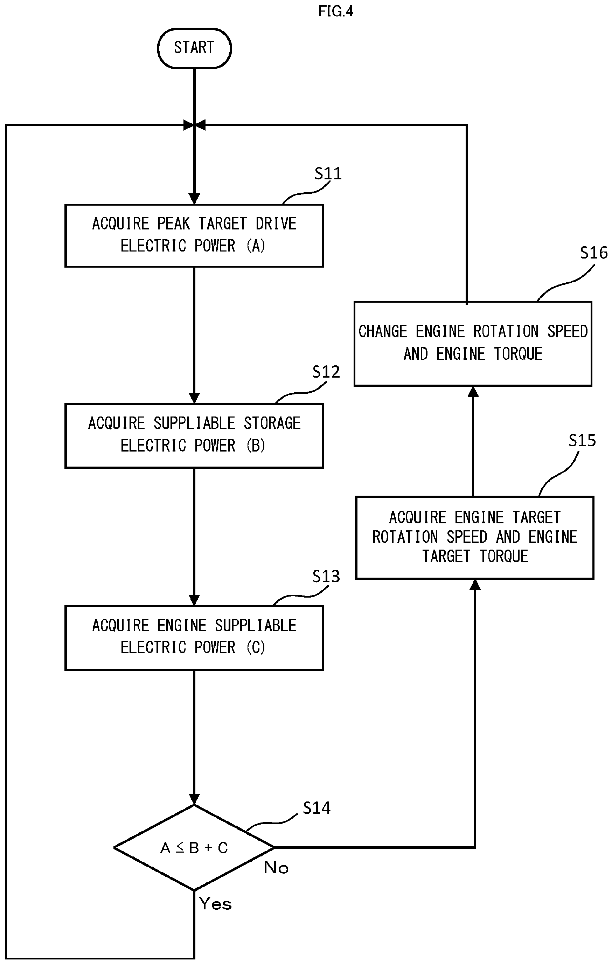

For example, an example, in which, when the state of the crankshaft 15 of the vehicle 1 illustrated in Fig. 6 is Y1, and the peak target drive electric power (A) acquired in the step S11 (Fig. 4) is E4 [W], is examined. The engine suppliable electric power (C) at the current engine rotation speed R1 acquired in the step S14 is T6 [Nm] $\times$ R1 [rpm] $\times$ $\alpha \times \beta$ = E2 (operating point Y2). Here, the value $\alpha$ is a constant that serves as a correction value from [rpm] $\times$ [Nm] to [W]. The value $\beta$ is a conversion efficiency from rotation power to electric power by the power generation electric motor 20. That is, the value $\beta$ is a value obtained by dividing the value of the electric power outputted from the power generation electric motor 20 when the rotation power outputted from the engine 10 is converted at the power generation electric motor 20 by the value of the rotation power outputted from the engine 10.

Here, three cases where the SOCs of the battery, which is an energy storage device 4, are different are explained. Case 1 is a case where the SOC of the energy storage device 4 is high, and therefore, the suppliable storage electric power (B) of the energy storage device 4 is E4-E2 [W]. Case 2 is a case where the SOC of the energy storage device 4 is slightly reduced, and therefore, the suppliable storage electric power (B) of the energy storage device 4 is E4 - E3 [W]. Case 3 is a case where the SOC of the energy storage device 4 is very low, and therefore, the suppliable storage electric power (B) of the energy storage device 4 is 0 [W].

1. Case 1

In the step S14, the vehicle integration controller 64 calculates the sum of the suppliable storage electric power (B) of the energy storage device 4 and the engine suppliable electric power (C) of the engine 10.

$$B + C = (E4 - E2) \, [W] + E2 \, [W] = E4 \, [W] = A$$

As a result, the determination in the step S14 is Yes. Accordingly, the operations do not proceed to the step S15, and the engine rotation speed of the engine 10 cannot be changed.
At this time, when the throttle valve is fully opened, the electric power E4 - E2 [W] from the energy storage device 4 and the electric power E2 [W] from the power generation electric motor 20 (see the arrow H1) are both instantly supplied to the propulsive electric motor 30. Accordingly, the electric power instantly supplied to the propulsive electric motor 30 is E4 [W] (= A).

2. Case 2

In the step S14, the vehicle integration controller 64 calculates the sum of the suppliable storage electric power (B) of the energy storage device 4 and the engine suppliable electric power (C) of the engine 10.

$$B + C = (E4 - E3) \, [W] + E2 \, [W] = E4 - E3 + E2 < A$$

As a result, the determination in the step S14 is No. At this time, the energy storage device 4 and the power generation electric motor 20 cannot instantly supply the electric power of E4 [W] (= A) to the propulsive electric motor 30 even when the throttle valve is fully opened. In this case, the operations proceed to the step S15 before an acceleration instruction, and the controller 60 acquires the target engine rotation speed and the target engine torque.
Specifically, A = E4 [W] and B = E4 - E3 [W]. Thus, the modified electric power (D) is represented as A - B = E3 [W]. At this time, the engine rotation speed at the intersection of the equal electric power line of E3 represented as a dotted line and the WOT curve W1 is R2 [rpm]. Accordingly, the target engine rotation speed is R2 [rpm]. The engine torque at the intersection of the equal rotation speed line of R2, which is a target engine rotation speed represented by a dotted line and the equal electric power line of E1 represented by a dotted line is T2 [rpm]. Accordingly, the target engine torque is T2 [rpm].
In the step S16, the controller 60 controls the engine 10 and the power generation electric motor 20 such that the engine rotation speed of the engine 10 will be the calculated target engine rotation speed. The power generation controller 62 controls the power generation electric motor 20 such that the load torque T3 of the power generation electric motor 20 will be the target engine torque T2, thereby changing the engine rotation speed of the engine 10 from R1 [rpm] to R2 [rpm]. That is, the state of the engine 10 shifts from the operating point Y1 to the operating point Z1 (see the arrow H2). In this way, the controller 60 adjusts the engine rotation speed and the engine torque, and the engine upper-limit power outputtable from the engine 10 thereby increases. That is, the margin driving force increases from H1 to H3.
The electric power (A) is acquired in the step S11 again, then the electric power (B) is acquired in the step S12, and thereafter, the engine suppliable electric power (C) at the current engine rotation speed is determined in the step S13. Then,

$$C = E3 \, [W]$$

is established. After that, in the step S14, the vehicle integration controller 64 calculates the sum of the suppliable storage electric power (B) and the engine suppliable electric power (C).

$$B + C = (E4 - E3) \, [W] + E3 \, [W] = E4 \, [W]$$

$$B + C = E4\,[W] = A$$

As a result, the determination in the step S14 is Yes. Accordingly, the operations do not proceed to the step S15, and the engine rotation speed of the engine 10 cannot be changed.

At this time, when the throttle valve is fully opened, the electric power E4 - E3 [W] from the energy storage device 4 and the electric power E3 [W] from the power generation electric motor 20 (see the arrow H3) are both instantly supplied to the propulsive electric motor 30. Accordingly, the electric power is instantly supplied to the propulsive electric motor 30 is E4 [W] (= A). That is, responsiveness similar to the case 1 is reproduced.

3. Case 3

In the step S14, the vehicle integration controller 64 calculates the sum of the suppliable storage electric power (B) of the energy storage device 4 and the engine suppliable electric power (C) of the engine 10.

$$B + C = 0\,[W] + E2\,[W] = E2\,[W] < A$$

As a result, the determination in the step S14 is No. At this time, the energy storage device 4 and the power generation electric motor 20 cannot instantly supply the electric power of E4 [W] (= A) to the propulsive electric motor 30 even when the throttle valve is fully opened by an acceleration instruction. In this case, the operations proceed to the step S15 before an acceleration instruction, and the controller 60 acquires the target engine rotation speed and the target engine torque.

Specifically, A = E4 [W] and B = 0. Thus, the modified electric power (D) is the peak target drive electric power (A) = E4 [W]. At this time, the engine rotation speed at the intersection of the equal electric power line of E4 represented as a dotted line and the WOT curve W1 is R3 [rpm]. The engine torque at the intersection of the equal rotation speed line of R3, which is a target engine rotation speed, represented by a dotted line and the equal electric power line of E1 represented by a dotted line is T1 [Nm]. Accordingly, the target engine torque is T1 [Nm].

In the step S16, the controller 60 controls the engine 10 and the power generation electric motor 20 such that the engine rotation speed of the engine 10 will be the calculated target engine rotation speed. The power generation controller 62 controls the power generation electric motor 20 such that the load torque of the power generation electric motor 20 will be the target engine torque T1, thereby changing the engine rotation speed of the engine 10 from R1 [rpm] to R3 [rpm]. That is, the state of the engine 10 shifts from the operating point Y1 to the operating point X1 (see the arrow H4). In this way, the controller 60 adjusts the engine rotation speed, and the engine upper-limit power outputtable from the engine 10 thereby increases. That is, the margin driving force increases from H1 to H5.

Next, in the step S17, the power generation controller 62 of the controller 60 finely adjusts (reduces) the load torque of the power generation electric motor 20. By finely adjusting the load torque of the power generation electric motor 20, the electric power value converted by the power generation electric motor 20 is made to be returned to the electric power value E1 [W] before changing the engine rotation speed. That is, the state of the engine 10 shifts from the operating point Y1 to the operating point Z2 (see the arrow H4).

The operations return again to the step S11, the electric power (A) is acquired, and the electric power (B) is acquired in the step S12, and thereafter, the engine suppliable electric power (C) at the current engine rotation speed is determined in the step S13. Then,

$$C = E4\,[W]$$

is established. After that, in the step S14, the vehicle integration controller 64 calculates the sum of the suppliable storage electric power (B) and the engine suppliable electric power (C).

$$B + C = 0\,[W] + E4\,[W]$$

$$0\,[W] + E4[W] = A$$

As a result, the determination in the step S14 is Yes. Accordingly, the operations do not proceed to the step S15, and the engine rotation speed of the engine 10 is not changed.

At this time, when the throttle valve is fully opened, the electric power E4 [W] (see the arrow H1) is instantly supplied from the power generation electric motor 20. Accordingly, the electric power instantly supplied to the propulsive electric motor 30 is E4 [W] (= A) (see the arrow H5). That is, responsiveness similar to the case 1 is reproduced.

Next, the operation of the controller 60 when the above acceleration instruction is made is explained. Fig. 7 is a flowchart for explaining the operation of the controller 60 when acceleration is instructed in the vehicle 1.

The operations illustrated in Fig. 7 are executed during the vehicle running. The operation illustrated in Fig. 7 is executed both when the accelerator grip is operated and when the accelerator grip is not operated. First, in the step S21, the target drive electric power acquiring part 645 in the vehicle integration controller 64 of the controller 60 determines the presence or absence of an acceleration instruction from the propulsion instruction part 8. Specifically, the location information of the propulsion instruction part 8 is acquired.

In the step S22, the target drive electric power acquiring part 645 calculates the target drive electric power (F). The target drive electric power (F) is drive electric power that the propulsive electric motor 30 requires to make an output according to the acceleration instruction. The target drive electric power (F) is, for example, determined by the required power included in the acceleration instruction.

In the step S23, the power generation controller 62 calculates the engine supply electric power (H). The engine supply electric power (H) is electric power supplied from the power generation electric motor 20 to the propulsive electric motor 30 such that the propulsive electric motor 30 outputs the target drive electric power (F). The engine supply electric power (H) is determined by the target drive electric power (F), the supply storage electric power (G), and the engine suppliable electric power (C). Here, the supply storage electric power (G) is electric power supplied from by the energy storage device 4 to the propulsive electric motor 30 such that the propulsive electric motor 30 outputs the target drive electric power (F). The power generation controller 62 calculates the engine supply electric power (H) such that the sum of the engine supply electric power (H) and the supply storage electric power (G) will be the target drive electric power (F). However, the engine supply electric power (H) cannot exceed the engine suppliable electric power (C), and the supply storage electric power (G) cannot exceed the suppliable storage electric power (B).

Here, a ratio between the supply storage electric power (G) and the engine supply electric power (H) can be set according to the state of the vehicle 1 or the selection by a driver. For example, the supply storage electric power (G) is increased to reach the target drive electric power (F) when the storage electric power of the energy storage device 4 is low or when a driver desires to suppress the energy consumption of the energy storage device 4. In contrast, when the amount of the fuel in the engine 10 is low, or when a driver desires to suppress the fuel consumption of the engine 10, the engine supply electric power (H) can be suppressed, and more supply storage electric power (G) can be supplied to the propulsive electric motor 30.

In the step S24, the engine controller 61 adjusts the engine output. Specifically, the engine controller 61 adjusts at least either one of the fuel supply amount by the fuel jetting device 18 or the opening degree of the throttle valve SV such that the engine 10 can output the engine supply electric power (H). Due to this operation, the power outputted from the engine 10 is changed, and the power generation electric motor 20 can supply the engine supply electric power (H) to the propulsive electric motor 30.

In the step S25, the propulsion controller 63 increases the electric power supplied to the propulsive electric motor 30. Specifically, the propulsion controller 63 controls the on/off operation of the switching parts of the inverter 80, thereby increasing the electric power supplied to the propulsive electric motor 30. The propulsion controller 63 makes the target drive electric power (F) supplied to the propulsive electric motor 30.

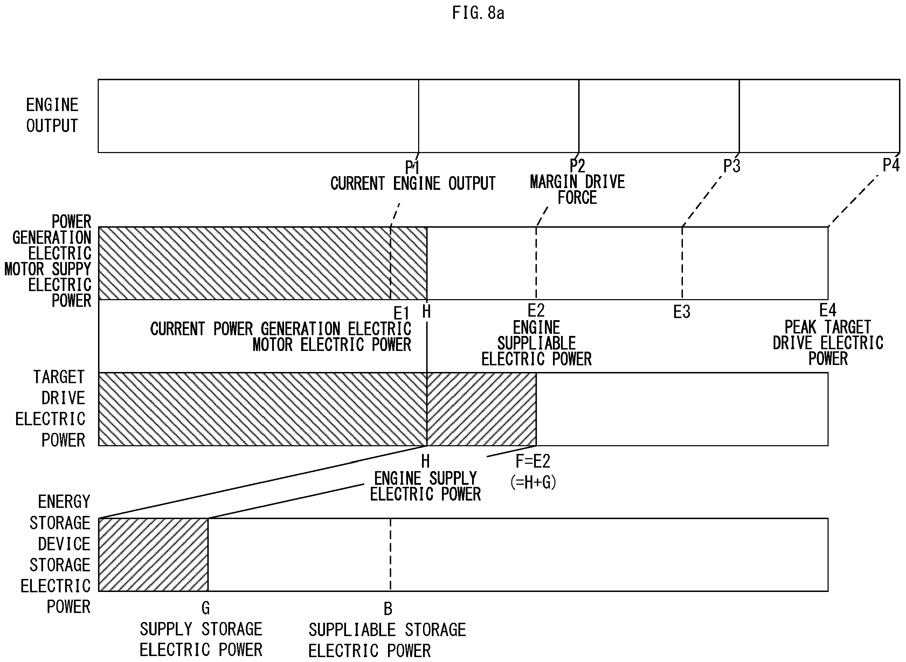

Here, the operations in the flow chart of Fig. 7 are explained with actual examples with reference to Figs. 8a to 8c. Figs. 8a to 8c are diagrams indicating the relationships among engine output, electric power supplied from the power generation electric motor 20, storage electric power of the energy storage device, and the target drive electric power when acceleration is instructed in the operating point Y1 illustrated in Fig. 6 for three cases in which the acceleration instruction amounts are different. In Figs. 8a to 8c, for example, the current output of the engine 10 is P1 [W]. At this time, the electric power that the power generation electric motor 20 that has received the power of the engine 10 supplies to the propulsive electric motor 30 is E1 (= P1 $\times$ β). Furthermore, since the current engine rotation speed of the engine 10 is R1 [rpm], the margin driving force of the engine 10 is P2 [W], and the suppliable electric power of the engine 10 is E2 [W]. In addition, the suppliable storage electric power (B) of the energy storage device 4 is E4 - E2 [W]. Furthermore, the peak target drive electric power (A) is E4 [W].

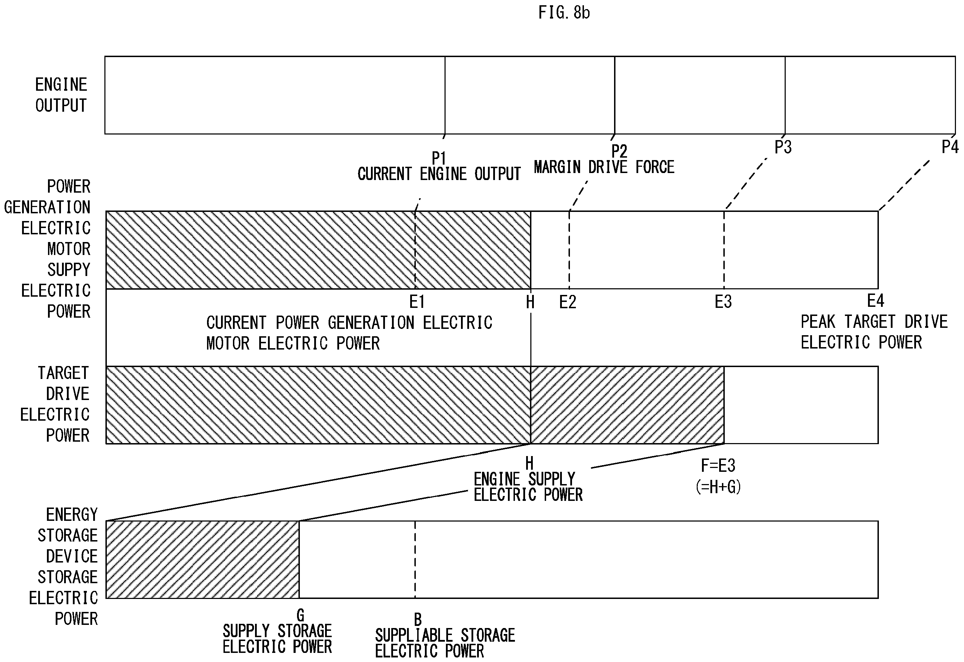

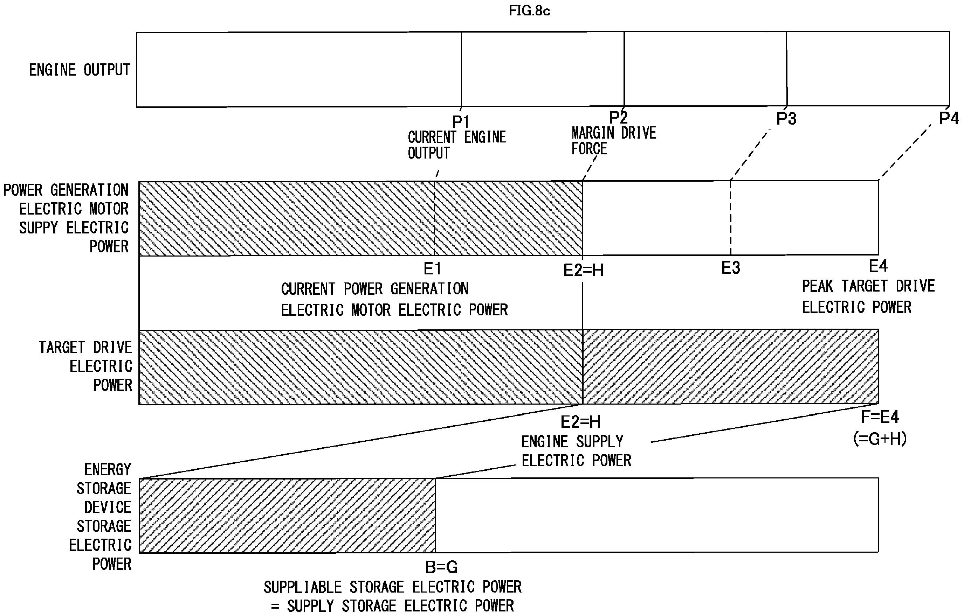

Here, the acceleration instruction in the step S21 is explained in three cases in which the amounts of the acceleration instruction are different. The case 1 is a case where the position of the propulsion instruction part 8 by an operation is 40% of the maximum position (Fig. 8a). The case 2 is a case where the position of the propulsion instruction part 8 by an operation is 80% of the maximum position (Fig. 8b). The case 3 is a case where the position of the propulsion instruction part 8 by an operation is 100% of the maximum position (Fig. 8c).

1. Case 1 (Fig. 8a)

In the step S21, an acceleration instruction received from the propulsion instruction part 8 is 40% of the maximum position of the propulsion instruction part 8. The vehicle integration controller 64 of the controller 60 sets, in the step S22, a target drive electric power (F), which is a drive electric power that the propulsive electric motor 30 requires to make an output according to an acceleration instruction. Here, in the case 1, the vehicle integration controller 64 determines that a required target drive electric power (F) is, for example, E2 (= P2 × β) [W],

In the step S23, the power generation controller 62 of the controller 60 calculates the engine supply electric power (H). The engine supply electric power (H) is set according to the energy storage state of the energy storage device 4, the residual fuel amount of the engine 10, the required power of an acceleration instruction, and the like. Here, the electric power currently supplied by the engine 10 via the power generation electric motor 20 is E1 (= P1 × β) [W]. Furthermore, since the current engine rotation speed of the engine 10 is R1 [rpm], the suppliable electric power of the engine 10 is E2 [W]. Accordingly, the engine supply electric power (H) can be set between E1 and E2 [W]. For example, the supply storage electric power is set to G (< E4 - E2) [W], and the engine supply electric power (H) is set to E2 - G [W].

In the step S24, the engine controller 61 of the controller 60 performs at least either one of increasing the fuel supply amount by the fuel jetting device 18 or opening the throttle valve SV. When the engine controller 61 performs at least either one of increasing the fuel supply amount by the fuel jetting device 18 or opening the throttle valve SV, the electric power that the power generation electric motor 20 that has received the power of the engine 10 supplies to the propulsive electric motor 30 increases from E1 [W] to E2 - G [W].

In the step S25, the propulsion controller 63 of the controller 60 controls the on/off operation of each switching part of the inverter 80, thereby increasing the electric power supplied to the propulsive electric motor 30. The propulsion controller 63 of the controller 60 increases the electric power supplied to the propulsive electric motor 30, thereby making the target drive electric power (F) supplied to the propulsive electric motor 30. At this time, since the engine supply electric power (H) is E2 - G [W], the electric power of F - (E2 - G) = G [W] is supplied from the energy storage device 4 to the propulsive electric motor 30. After the target drive electric power (F) is supplied to the propulsive electric motor 30, the operations return to the step S21.

Note that, in the case 1, for example, the engine supply electric power (H) can be set to E2 (= F) [W] when the energy storage amount of the energy storage device 4 is small and the residual fuel amount of the engine 10 is large, or when a driver desires to suppress the energy consumption of the energy storage device. This is because, since the engine suppliable electric power (C) is E3 (> F) [W], the target drive electric power (F) can be supplied only from the engine 10. By increasing the engine supply electric power (H), the remaining storage amount in the energy storage device 4 can be prevented from decreasing. In contrast, the engine supply electric power (H) can be set to E1 [W] when the energy storage amount of the energy storage device 4 is large, and the residual fuel amount of the engine 10 is small, or when a driver desires to suppress the fuel consumption of the engine 10. This is because, when the energy storage amount of the energy storage device 4 is large, the target drive electric power (F) can be supplied only from the energy storage device 4 in some cases. When the engine supply electric power (H) is set to E1 [W], in the step S24, the engine controller 61 does not increase the supply amount of fuel by the fuel jetting device 18 and does not increase the opening degree of the throttle valve SV.

2. Case 2 (Fig. 8b)

In the step S21, an acceleration instruction received from the propulsion instruction part 8 is 80% of the maximum position of the propulsion instruction part 8. The vehicle integration controller 64 of the controller 60 determines, in the step S22, that required drive electric power (target drive electric power (F)) according to an acceleration instruction is, for example, E3 (= P3 × β) [W].

In the step S23, the power generation controller 62 of the controller 60 calculates the engine supply electric power (H). Here, the electric power currently supplied by the engine 10 via the power generation electric motor 20 is E1 (=P1 × β) [W]. Furthermore, since the current engine rotation speed of the engine 10 is R1 [rpm], the suppliable electric power of the engine 10 is E2 [W]. Accordingly, the engine supply electric power (H) can be set between E1 and E2 [W]. For example, the supply storage electric power is set to G (< B), and the engine supply electric power (H) is set to E3 - G (> E2) [W].

In the step S24, the engine controller 61 of the controller 60 performs at least either one of increasing the fuel supply amount by the fuel jetting device 18 and opening the throttle valve SV. When the engine controller 61 performs at least either one of increasing the fuel supply amount by the fuel jetting device 18 and opening the throttle valve SV, the electric power that the power generation electric motor 20 that has received the power of the engine 10 supplies to the propulsive electric motor 30 increases from E1 [W] to E3- G [W].

In the step S25, the propulsion controller 63 of the controller 60 controls the on/off operation of each switching part of the inverter 80, thereby increasing the electric power supplied to the propulsive electric motor 30. The propulsion controller 63 of the controller 60 increases the electric power supplied to the propulsive electric motor 30, thereby making the target drive electric power (F) supplied to the propulsive electric motor 30. At this time, since the engine supply electric power (H) is E3 - G [W], the electric power of F - (E3 - G) = G [W] is supplied from the energy storage device 4 to the propulsive electric motor 30. After the target drive electric power (F) is supplied to the propulsive electric motor 30, the operations return to the step S21.

Note that the engine supply electric power (H) can be set to E2 [W] when the energy storage amount of the energy storage device 4 is small and the residual fuel amount of the engine 10 is large, or when a driver desires to suppress the energy consumption of the energy storage device. This is because, since the engine suppliable electric power (C) is E2 [W], the target drive electric power (F) can be supplied to the propulsive electric motor 30 if only a shortage of the electric power to the target drive electric power (F) of the engine suppliable electric power (C) can be acquired from the energy storage device 4. This is because, by increasing the engine supply electric power (H), the remaining storage amount in the energy storage device 4 can be prevented from decreasing. In contrast, the engine supply electric power (H) can be set to E1 [W] when the energy storage amount of the energy storage device 4 is large, and the residual fuel amount of the engine 10 is small, or when a driver desires to suppress the fuel consumption of the engine 10. This is because, when the energy storage amount of the energy storage device 4 is large, the target drive electric power (F) can be supplied from the energy storage device 4 in some cases.

3. Case 3 (Fig. 8c)

In the step S21, an acceleration instruction received from the propulsion instruction part 8 is 100% of the maximum position of the propulsion instruction part 8. The vehicle integration controller 64 of the controller 60 determines, in the step S22, that required drive electric power (target drive electric power (F)) according to an acceleration instruction is, for example, E4 (= P4 $\times$ $\beta$) [W].

In the step S23, the power generation controller 62 of the controller 60 calculates the engine supply electric power (H). Here, the electric power currently supplied by the engine 10 via the power generation electric motor 20 is E1 (=P1 $\times$ $\beta$) [W]. Furthermore, since the current engine rotation speed of the engine 10 is R1 [rpm], the engine suppliable electric power (C) is E2 [W]. In the case 3, since the target drive electric power (F) is E4 [W], and the suppliable storage electric power is E4 - E2 [W], the engine supply electric power (H) is set to E4 - (E4 - E2) = E2 [W].

In the step S24, the engine controller 61 of the controller 60 performs at least either one of increasing the fuel supply amount by the fuel jetting device 18 and opening the throttle valve SV. When the engine controller 61 performs at least either one of increasing the fuel supply amount by the fuel jetting device 18 and opening the throttle valve SV, the electric power that the power generation electric motor 20 that has received the power of the engine 10 supplies to the propulsive electric motor 30 increases from E1 to E2.

In the step S25, the propulsion controller 63 of the controller 60 controls the on/off operation of the switching parts of the inverter 80, thereby increasing the electric power supplied to the propulsive electric motor 30. The propulsion controller 63 of the controller 60 increases the electric power supplied to the propulsive electric motor 30, thereby making the target drive electric power (F) supplied to the propulsive electric motor 30. At this time, since the engine supply electric power (H) is E2 [W], the electric power of E4 -E2 [W] is supplied from the energy storage device 4 to the propulsive electric motor 30. After the target drive electric power (F) is supplied to the propulsive electric motor 30, the operations return to the step S21.

Note that, since the target drive electric power (F) is equivalent to the peak target drive electric power (A) in the case 3, the output supplied from the power generation electric motor and the electric power supplied from the energy storage device are both maximized. Accordingly, the engine suppliable electric power (C) is supplied from the engine, and the suppliable storage electric power (B) is supplied from the energy storage device to the propulsive electric motor 30. At this time, since the engine 10 outputs the maximum output at the current rotation number, the fuel supply amount and the throttle opening degree are maximized.

As stated above, in the present embodiment, operations for changing the engine state from operating point Y1 while the operating point Y1 of the engine 10 illustrated in Fig. 6 is set as a starting point. Meanwhile, the operations illustrated in the flow chart of Fig. 7 may also be applied, for example, to the operation starting from the operating point Z1 or X1 illustrated in Fig. 6.

In the present embodiment, when the propulsion instruction part 8 outputs an acceleration instruction as the step S21 in Fig. 7 during the operations in Fig. 4, electric power according to the acceleration instruction is supplied to the propulsive electric motor 30 regardless of the energy storage amount of the energy storage device 4 (S25 in Fig. 7).

This is because the controller 60 changes the engine rotation speed of the engine 10 at least according to the energy storage amount of the energy storage device 4 before an acceleration instruction (S15 to S16 in Fig. 4). Then, triggered by an acceleration instruction, the storage electric power supplied from the power generation electric motor 20 and/or the energy storage device 4 to the propulsive electric motor 30 can be increased to the target drive electric power according to an acceleration instruction regardless of the energy storage amount of the energy storage device 4.

For example, the controller 60 always controls the engine rotation speed of the engine 10 such that the electric power supplied from the energy storage device 4 and/or the power generation electric motor 20 to the propulsive electric motor 30 can be increased to the peak target drive electric power according to a maximum acceleration instruction. The controller 60 increases the margin driving force by changing the engine rotation speed of the engine 10.

As discussed above, the vehicle 1 has reproducibility of the response of output of a vehicle to an acceleration instruction regardless of the energy storage state of the energy storage device 4.

Furthermore, the controller 60 controls engine rotation speed of the engine 10 such that the sum of the electric power obtained by converting the margin driving force of the engine 10 by the power generation electric motor 20 and the storage electric power suppliable from the energy storage device 4 at a point of time before an acceleration instruction will be a target value. The target value is determined on the basis of the operation amount of the propulsion instruction part 8 and the speed of the vehicle 1 regardless of the energy storage amount of the energy storage device 4.

The controller 60 increases the rotation speed of the engine by reducing the load torque of the power generation electric motor 20 at least according to the energy storage amount of the energy storage device 4 before an acceleration instruction of the propulsion instruction part 8.

Therefore, the amount of change of a rotation speed of the engine from a point of time of the acceleration instruction of the propulsion instruction part 8 to a point of time when the rotation speed of the engine 10 increases to reach a predetermined reference speed becomes smaller by a degree according to an energy storage amount of the energy storage device 4. That is, the controller 60 controls the engine and the power generation electric motor such that the amount of change of a rotation speed of the engine from a point of time of the acceleration instruction to a point of time when the rotation speed of the engine 10 increases to reach a predetermined reference speed will be smaller by the degree according to an energy storage amount of the energy storage device.

According to the present embodiment, the rotation speed of the engine 10 is increased before an acceleration instruction, and the amount of change of a rotation speed of the engine 10 from a point of time of the acceleration instruction to a point of time when the rotation speed of the engine 10 increases to reach a predetermined reference speed is small. For this reason, the power consumption by the inertia torque along with the output increase of the rotation speed of the crankshaft 15 of the engine 10 becomes smaller by the degree according to an energy storage amount of the energy storage device 4. Accordingly, the vehicle 1 can maintain the responsiveness of output increase to the acceleration instruction with respect to a target even if the energy storage amount is small.

Note that, regarding the preparation for output increase in the present embodiment, the following method may be performed in some cases other than reducing the load torque of the power generation electric motor 20 according to the energy storage amount of the energy storage device 4 to increase the rotation speed of the engine 10. For example, when the energy storage amount of the energy storage device 4 is small, the rotation speed of the engine 10 is increased by outputting the maximum torque according to the energy storage amount of the energy storage device 4. Additionally, the engine 10 is operated according to the energy storage amount of the energy storage device 4 on the optimal fuel economy line of the engine 10.

[Modified Example]

As stated above, a series hybrid-type vehicle is explained in the embodiments. Meanwhile, the present embodiment can also be applied to series-parallel hybrid system vehicles. A series-parallel hybrid system vehicle can transmit the power from an engine directly to a propulsion system. For example, the above embodiment can be applied to a series-parallel hybrid system vehicle when the engine is used only for power generation, and the propulsion system is driven only by a propulsive electric motor that has received the supply of the electric power from an energy storage device and/or a power generation electric motor.

[Description of the Reference Numerals]

| | |
|---|---|
| 1 | Vehicle |
| 2 | Body |
| 3b | Propulsion system |
| 4 | Energy storage device |
| 8 | Propulsion instruction part |
| 10 | Engine |
| 11 | Crankcase |
| 12 | Cylinder |
| 13 | Piston |

EP 4 001 036 B1

| 14 | Connecting rod |
|---|---|
| 15 | Crankshaft |
| 16 | Cylinder head |
| 18 | Fuel jetting device |
| 19 | Ignition plug |
| 20 | Power generation electric motor |
| 21, 31 | Rotor |
| 22, 32 | Stator |
| 24, 34 | Rotor position detection device |
| 30 | Propulsive electric motor |
| 60 | Controller |
| 61 | Engine controller |
| 62 | Power generation controller |
| 63 | Propulsion controller |
| 64 | Vehicle integration controller |
| 65 | Current and voltage sensor |
| 70 | Converter |
| 80 | Inverter |
| 90 | Drive shaft |
| GU | Power generation unit |
| DU | Driving unit |
| SV | Throttle valve |

**Claims**

1. A vehicle (1), comprising:

   an engine (10) having a rotatable crankshaft (15) and configured to output power generated by combustion as both torque and a rotation speed of the crankshaft (15);
   a power generation electric motor (20) disposed so as to operate in conjunction with the crankshaft (15) and configured to be driven by the engine (10) to generate electric power;
   an energy storage device (4) configured to store the electric power generated by the power generation electric motor (20) as stored energy;
   a propulsive electric motor (30) configured to receive electric power from the energy storage device (4) and/or the power generation electric motor (20) so as to output power, the propulsive electric motor (30) being different from the power generation electric motor (20);
   a propulsion system (3b) configured to be driven by the power outputted from the propulsive electric motor (30); and
   a controller (60) configured to:

      control the engine (10), the propulsive electric motor (30), and the power generation electric motor (20) so as to control the engine (10) and the power generation electric motor (20) such that electric power supplied to the propulsive electric motor (30) is increased in response to an acceleration instruction; and **characterized in that** the controller (60) is configured to
      when the propulsion system (3b) is driven only by the power outputted from the propulsive electric motor (30), increase a rotation speed of the engine (10) before the acceleration instruction by reducing a load torque of the power generation electric motor (20) at least according to an energy storage amount of the energy storage device (4), such that a target power to be outputted according to the acceleration instruction by the propulsive electric motor (30) that is driven by electric power supplied from the energy storage device (4) and/or the power generation electric motor (20) is outputted in response to the acceleration instruction as a trigger regardless of an energy storage amount of the energy storage device (4).

2. The vehicle (1) according to claim 1, wherein
   the controller (60) is configured to control the engine (10) and the power generation electric motor (20) such that an amount of change of a rotation speed of the engine (10) from a point of time of the acceleration instruction to a point of time when the rotation speed increases to reach a predetermined reference speed is smaller by a degree according to an energy storage amount of the energy storage device (4).

24

**3.** The vehicle (1) according to claim 2, wherein
the controller (60) is configured to

control the engine (10) and the power generation electric motor (20) according to an energy storage amount of the energy storage device (4) before the acceleration instruction such that
a sum of electric power outputted from the power generation electric motor (20) driven by a maximum power outputtable from the engine (10) at a rotation speed at a point of time before the acceleration instruction and electric power supplied from the energy storage device (4) equals a target value set according to a current vehicle speed and a current opening degree of a throttle valve of the engine (10).


**Patentansprüche**

**1.** Ein Fahrzeug (1), das folgende Merkmale aufweist:

eine Maschine (10) mit einer drehbaren Kurbelwelle (15), die dazu ausgebildet ist, Leistung, die durch Verbrennung erzeugt wird, als sowohl Drehmoment als auch Rotationsgeschwindigkeit der Kurbelwelle (15) auszugeben;
einen Leistungserzeugungs-Elektromotor (20), der so angeordnet ist, dass er in Verbindung mit der Kurbelwelle (15) arbeitet, und dazu ausgebildet ist, durch die Maschine (10) angetrieben zu werden, um elektrische Leistung zu erzeugen;
eine Energiespeichervorrichtung (4), die dazu ausgebildet ist, die elektrische Leistung, die durch den Leistungserzeugungs-Elektromotor (20) erzeugt wird, als gespeicherte Energie zu speichern;
einen Vortriebselektromotor (30), der dazu ausgebildet ist, elektrische Leistung von der Energiespeichervorrichtung (4) und/oder dem Leistungserzeugungs-Elektromotor (20) aufzunehmen, um so Leistung auszugeben, wobei sich der Vortriebselektromotor (30) von dem Leistungserzeugungs-Elektromotor (20) unterscheidet;
ein Vortriebssystem (3b), das dazu ausgebildet ist, durch die Leistung, die aus dem Vortriebselektromotor (30) ausgegeben wird, angetrieben zu werden; und
eine Steuerung (60), die ausgebildet ist zum:
Steuern der Maschine (10), des Vortriebselektromotors (30) und des Leistungserzeugungs-Elektromotors (20), um so die Maschine (10) und den Leistungserzeugungs-Elektromotor (20) derart zu steuern, dass elektrische Leistung, die dem Vortriebselektromotor (30) zugeführt wird, ansprechend auf einen Beschleunigungsbefehl erhöht wird; und **dadurch gekennzeichnet, dass** die Steuerung (60) ausgebildet ist zum:
wenn das Vortriebssystem (3b) nur durch die Leistung angetrieben wird, die aus dem Vortriebselektromotor (30) ausgegeben wird, Erhöhen einer Rotationsgeschwindigkeit der Maschine (10) vor dem Beschleunigungsbefehl durch Reduzieren eines Lastdrehmoments des Leistungserzeugungs-Elektromotors (20) zumindest gemäß einer Energiespeichermenge der Energiespeichervorrichtung (4), derart, dass eine Zielleistung, die gemäß dem Beschleunigungsbefehl durch den Vortriebselektromotor (30) ausgegeben werden soll, der durch elektrische Leistung angetrieben wird, die von der Energiespeichervorrichtung (4) und/oder dem Leistungserzeugungs-Elektromotor (20) zugeführt wird, ansprechend auf den Beschleunigungsbefehl als Auslöser ausgegeben wird, und zwar unabhängig von einer Energiespeichermenge der Energiespeichervorrichtung (4).

**2.** Das Fahrzeug (1) gemäß Anspruch 1, bei dem
die Steuerung (60) dazu ausgebildet ist, die Maschine (10) und den Leistungserzeugungs-Elektromotor (20) derart zu steuern, dass
eine Änderungsmenge einer Rotationsgeschwindigkeit der Maschine (10) von einem Zeitpunkt des Beschleunigungsbefehls bis zu einem Zeitpunkt, zu dem die Rotationsgeschwindigkeit steigt, um eine vordefinierte Referenzgeschwindigkeit zu erreichen, um ein Maß gemäß einer Energiespeichermenge der Energiespeichervorrichtung (4) kleiner ist.

**3.** Das Fahrzeug (1) gemäß Anspruch 2, bei dem

die Steuerung (60) dazu ausgebildet ist,
die Maschine (10) und den Leistungserzeugungs-Elektromotor (20) gemäß einer Energiespeichermenge der Energiespeichervorrichtung (4) vor dem Beschleunigungsbefehl derart zu steuern, dass
eine Summe elektrischer Leistung, die aus dem Leistungserzeugungs-Elektromotor (20) ausgegeben wird, der durch eine maximale Leistung angetrieben wird, die aus der Maschine (10) ausgebbar ist, bei einer Rotationsgeschwindigkeit zu einem Zeitpunkt vor dem Beschleunigungsbefehl und elektrischer Leistung, die von der Energiespeichervorrichtung (4) zugeführt wird, gleich einem Zielwert ist, der gemäß einer momentanen Fahrzeuggeschwindigkeit und einem momentanen Öffnungsgrad eines Drosselventils der Maschine (10) eingestellt ist.

## Revendications

1. Véhicule (1), comprenant:

   un moteur (10) présentant un vilebrequin rotatif (15) et configuré pour sortir de la puissance générée par combustion sous forme tant de couple que de vitesse de rotation du vilebrequin (15);
   un moteur électrique de génération d'énergie (20) disposé de manière à fonctionner conjointement avec le vilebrequin (15) et configuré pour être entraîné par le moteur (10) pour générer de l'énergie électrique;
   un dispositif d'accumulation d'énergie (4) configuré pour accumuler l'énergie électrique générée par le moteur électrique de génération d'énergie (20) comme énergie accumulée;
   un moteur électrique propulsif (30) configuré pour recevoir de l'énergie électrique provenant du dispositif d'accumulation d'énergie (4) et/ou du moteur électrique de génération d'énergie (20) de manière à sortir de l'énergie, le moteur électrique propulsif (30) étant différent du moteur électrique de génération d'énergie (20);
   un système de propulsion (3b) configuré pour être entraîné par la puissance sortie par le moteur électrique propulsif (30); et
   un moyen de commande (60) configuré pour:
   commander le moteur (10), le moteur électrique propulsif (30) et le moteur électrique de génération d'énergie (20) de manière à commander le moteur (10) et le moteur électrique de génération d'énergie (20) de sorte que l'énergie électrique alimentée vers le moteur électrique propulsif (30) soit augmentée en réponse à une instruction d'accélération;
   et **caractérisé par le fait que** le moyen de commande (60) est configuré pour
   lorsque le système de propulsion (3b) est entraîné uniquement par la puissance sortie par le moteur électrique propulsif (30), augmenter une vitesse de rotation du moteur (10) avant l'instruction d'accélération en réduisant un couple de charge du moteur électrique de génération d'énergie (20) au moins selon une quantité d'accumulation d'énergie du dispositif d'accumulation d'énergie (4), de sorte qu'une puissance cible à sortir selon l'instruction d'accélération par le moteur électrique propulsif (30) qui est entraîné par l'énergie électrique alimentée par le dispositif d'accumulation d'énergie (4) et/ou le moteur électrique de génération d'énergie (20) soit sortie en réponse à l'instruction d'accélération comme déclencheur, quelle que soit la quantité d'accumulation d'énergie du dispositif d'accumulation d'énergie (4).

2. Véhicule (1) selon la revendication 1, dans lequel
   le moyen de commande (60) est configuré pour commander le moteur (10) et le moteur électrique de génération d'énergie (20) de sorte que
   une quantité de changement d'une vitesse de rotation du moteur (10) d'un moment de l'instruction d'accélération à un moment où la vitesse de rotation augmente pour atteindre une vitesse de référence prédéterminée soit inférieure d'un degré selon une quantité d'accumulation d'énergie du dispositif d'accumulation d'énergie (4).

3. Véhicule (1) selon la revendication 2, dans lequel le moyen de commande (60) est configuré pour

   commander le moteur (10) et le moteur électrique de génération d'énergie (20) selon une quantité d'accumulation d'énergie du dispositif d'accumulation d'énergie (4) avant l'instruction d'accélération de sorte que
   une somme d'énergie électrique sortie par le moteur électrique de génération d'énergie (20) entraîné par une puissance maximale pouvant être sortie par le moteur (10) à une vitesse de rotation à un moment avant l'instruction d'accélération et d'énergie électrique sortie par le dispositif d'accumulation d'énergie (4) soit égale à une valeur cible établie selon une vitesse de véhicule actuelle et un degré d'ouverture actuel d'une soupape d'étranglement du moteur (10).

FIG. 1

(a)

(b)

(c)

ENGINE TORQUE
LOAD TORQUE OF
POWER GENERATION
ELECTRIC
MOTOR [Nm]

ENGINE ROTATION SPEED
ROTATION SPEED OF POWER GENERATION
ELECTRIC MOTOR [rpm]

ENGINE TORQUE
LOAD TORQUE OF
POWER GENERATION
ELECTRIC
MOTOR [Nm]

ENGINE ROTATION SPEED
ROTATION SPEED OF POWER GENERATION
ELECTRIC MOTOR [rpm]

## FIG. 2

ENGINE CONTROLLER — 61

ELECTRIC POWER GENERATION CONTROLLER — 62

PROPULSION CONTROLLER — 63

VEHICLE INTEGRATION CONTROLLER — 64

PEAK TARGET DRIVE ELECTRIC POWER ACQUIRING PART — 641

SUPPLIABLE STORAGE ELECTRIC POWER DETERMINATION PART — 642

ENGINE SUPPLIABLE ELECTRIC POWER DETERMINATION PART

TARGET ENGINE ROTATION SPEED/TORQUE ACQUIRING PART — 644

TARGET DRIVE ELECTRIC POWER ACQUIRING PART — 645

643

60

65

4

7

70

CONVERTER

24

21

22

20

17

10

15c

15

13
14
12
11

SV

18

19
16

GU

8

8a

80

INVERTER

34

32

31

3d

3b

30

90

DU

1

2

EP 4 001 036 B1

FIG.3

FIG.4

```
                    ┌─────────┐
                    │  START  │
                    └─────────┘
                         │
                         ▼
   ┌──────────────────────────────────────┐  S11
   │      ACQUIRE PEAK TARGET DRIVE        │
   │        ELECTRIC POWER (A)             │
   └──────────────────────────────────────┘
                         │
                         ▼
   ┌──────────────────────────────────────┐  S12
   │    ACQUIRE SUPPLIABLE STORAGE         │
   │        ELECTRIC POWER (B)             │
   └──────────────────────────────────────┘
                         │
                         ▼
   ┌──────────────────────────────────────┐  S13
   │     ACQUIRE ENGINE SUPPLIABLE         │
   │        ELECTRIC POWER (C)             │
   └──────────────────────────────────────┘
                         │
                         ▼
                  ╱─────────────╲  S14
                 ╱   A ≦ B + C    ╲──── No
                 ╲               ╱
                  ╲─────────────╱
                       │ Yes
```

S16  CHANGE ENGINE ROTATION SPEED AND ENGINE TORQUE

S15  ACQUIRE ENGINE TARGET ROTATION SPEED AND ENGINE TARGET TORQUE

FIG.5

POWER OUTPUTTABLE
FROM POWER GENERATION
ELECTRIC MOTOR [W]

0

REDUCTION AMOUNT FROM SOC (%)
BATTERY FULLY CHARGED AMOUNT

FIG.6

ENGINE ROTATION SPEED
ROTATION SPEED OF POWER GENERATION
ELECTRIC MOTOR [rpm]

FIG.7

```
                    ┌─────────┐
                    │  START  │
                    └─────────┘
                         │
        ┌────────────────┤
        │                ▼
        │            ╱ ─────── ╲                    S21
        │          ╱  ACCELERATION ╲
        │  No    ◄   INSTRUCTED?     ►
        │          ╲             ╱
        │            ╲ ─────── ╱
        │               │ Yes
        │               ▼
        │     ┌──────────────────────┐             S22
        │     │ CALCULATES TARGET DRIVE │
        │     │   ELECTRIC POWER (F)    │
        │     └──────────────────────┘
        │               │
        │               ▼
        │     ┌──────────────────────┐             S23
        │     │  CALCULATES ENGINE     │
        │     │ SUPPLY ELECTRIC POWER  │
        │     │          (H)           │
        │     └──────────────────────┘
        │               │
        │               ▼
        │     ┌──────────────────────┐             S24
        │     │  ADJUST FUEL SUPPLY    │
        │     │ AMOUNT AND/OR THROTTLE │
        │     │  VALVE OPENING DEGREE  │
        │     └──────────────────────┘
        │               │
        │               ▼
        │     ┌──────────────────────┐             S25
        │     │ INCREASE ELECTRIC POWER│
        │     │  SUPPY AMOUNT TO       │
        │     │  PROPULSIVE ELECTRIC   │
        │     │       MOTOR            │
        │     └──────────────────────┘
        │               │
        └───────────────┘
```

FIG. 8a

FIG. 8b

ENGINE OUTPUT

P1 CURRENT ENGINE OUTPUT  P2 MARGIN DRIVE FORCE  P3  P4

POWER GENERATION ELECTRIC MOTOR SUPPY ELECTRIC POWER

E1  H  E2  E3  E4

CURRENT POWER GENERATION ELECTRIC MOTOR ELECTRIC POWER

PEAK TARGET DRIVE ELECTRIC POWER

TARGET DRIVE ELECTRIC POWER

H ENGINE SUPPLY ELECTRIC POWER

F=E3 (=H+G)

ENERGY STORAGE DEVICE STORAGE ELECTRIC POWER

G SUPPLY STORAGE ELECTRIC POWER

B SUPPLIABLE STORAGE ELECTRIC POWER

EP 4 001 036 B1

FIG.8c

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 0830968 A1
- EP 0556942 A1
- JP H0888905 A
- DE 4133013 A1
- JP 2007131179 A
- JP 2016199225 A